# EUROPEAN PATENT APPLICATION

(11) **EP 3 255 535 A1**
(43) Date of publication of application: **13.12.2017**
(21) Application number: 15883718.7
(22) Date of filing: 05.03.2015
(51) Int. Cl.: G06F 3/0488, G06F 3/0481

(54) **PROCESSING METHOD FOR USER INTERFACE OF TERMINAL, USER INTERFACE AND TERMINAL**

(71) Applicant: HUAWEI TECHNOLOGIES CO., LTD., Guangdong 518129 (CN)
(72) Inventor: LI, Jianhua, Shenzhen Guangdong 518129 (CN); GAN, Yuanli, Shenzhen Guangdong 518129 (CN); ZHAO, Wei, Shenzhen Guangdong 518129 (CN); GAO, Wei, Shenzhen Guangdong 518129 (CN); HUANG, Bangbang, Shenzhen Guangdong 518129 (CN)
(74) Representative: Goddar, Heinz J.
(86) International application number: PCT/CN2015/073688
(87) International publication number: WO 2016/138661

(57) **Abstract**

The present invention provides a method for processing a user interface of a terminal, a user interface, and a terminal. The method includes: obtaining a first operation input by a user, and determining a first touch event corresponding to the first operation; and presenting, in a preset area of a display of a terminal according to the first touch event, a first interface for the user to operate with one hand. The method provided in embodiments of the present invention diversifies a manner of triggering a terminal to generate a one-handed operation interface, and further improves intelligence of human-machine interaction.

## Description

### TECHNICAL FIELD

The present invention relates to communications technologies, and in particular, to a method for processing a user interface of a terminal, a user interface, and a terminal.

### BACKGROUND

With continuous development of terminal technologies, an increasing quantity of large-screen electronic devices appear on the market, and using a large-screen electronic device has become a fashion among users. A mobile phone is used as an example. A screen of a mobile phone currently available on the market is already larger than a normal human palm in size, and some mobile phones even have a screen of more than 6 inches. When a user uses these large-screen mobile phones, the user usually needs to hold a mobile phone with one hand, and tap with the other hand to complete a touch operation on a touchscreen.

In view of inconvenience for a one-handed operation, the prior art provides the following solution: touching a specific tool on a touchscreen or pressing a specific physical button on a terminal, to trigger an interface displayed on a display to change into a size that is more suitable for the user to operate with one hand.

However, in the prior art, a manner of triggering a terminal to generate a one-handed operation interface is onefold and cannot meet using requirements of a user, and human-machine interaction is not intelligent enough.

### SUMMARY

Embodiments of the present invention provide a method for processing a user interface of a terminal, a user interface, and a terminal, to resolve the following technical problem in the prior art: A manner of generating a one-handed operation interface is onefold and cannot meet using requirements of a user, and human-machine interaction is not intelligent enough.

According to a first aspect, an embodiment of the present invention provides a method for processing a user interface of a terminal, including:
obtaining a first operation input by a user, and determining a first touch event corresponding to the first operation, where the first touch event includes at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
presenting, in a preset area of a display of the terminal according to the first touch event, a first interface for the user to operate with one hand, where content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

With reference to the first aspect, in a first possible implementation manner of the first aspect, the first swipe event includes a swipe track corresponding to the first operation in the navigation area, a swipe speed corresponding to the first operation in the navigation area, and a swipe direction corresponding to the first operation in the navigation area;
the second swipe event includes a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation;
the double-tap event includes a type of the virtual button touched in the first operation, and a quantity of taps of the first operation on the virtual button touched in the first operation. The type of the virtual button includes a virtual home button, a virtual back button, and a virtual multitasking button; and
the first touch-and-hold event includes the type of the virtual button touched in the first operation, and contact duration of the first operation on the virtual button touched in the first operation.

With reference to the first possible implementation manner of the first aspect, in a second possible implementation manner of the first aspect, the presenting, in a preset area of a display of the terminal according to the first touch event, a first interface for the user to operate with one hand specifically includes:
when the first touch event is the first swipe event, after determining that the swipe track corresponding to the first operation in the navigation area and the swipe speed corresponding to the first operation in the navigation area meet a first preset condition, presenting, by the terminal, the first interface on the display according to the swipe direction corresponding to the first operation in the navigation area; or
when the first touch event is the second swipe event, after determining that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, presenting, by the terminal, the first interface on the display according to the swipe direction of the first operation on the physical button touched in the first operation; or
when the first touch event is the double-tap event, presenting, by the terminal, the first interface on the display when determining that the type of the virtual button touched in the first operation matches a first preset type, and that the virtual button touched in the first operation is tapped twice in the first operation; or
when the first touch event is the first touch-and-hold event, presenting, by the terminal, the first interface on the display when determining that the type of the virtual button touched in the first operation matches a second preset type, and that the contact duration of the first operation on the virtual button touched in the first operation meets first preset duration.

With reference to any one of the first aspect, or the first or the second possible implementation manners of the first aspect, in a third possible implementation manner of the first aspect, after the presenting, in a preset area of a display of the terminal according to the first touch event, a first interface for the user to operate with one hand, the method further includes:
obtaining a second operation input by the user, and determining a second touch event corresponding to the second operation, where the second touch event includes at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, where the adjustable area is an area on the display other than the first interface; and
adjusting a size of the first interface according to the second touch event.

With reference to the third possible implementation manner of the first aspect, in a fourth possible implementation manner of the first aspect, the third swipe event includes a swipe track corresponding to the second operation in the navigation area, a swipe speed corresponding to the second operation in the navigation area, and a swipe direction corresponding to the second operation in the navigation area;
the fourth swipe event includes a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation;
the second touch-and-hold event includes a type of the virtual button touched in the second operation, and contact duration of the second operation on the virtual button touched in the second operation; and
the fifth swipe event includes a swipe direction corresponding to the second operation in the adjustable area, and a swipe speed corresponding to the second operation in the adjustable area.

With reference to the fourth possible implementation manner of the first aspect, in a fifth possible implementation manner of the first aspect, the adjusting a size of the first interface according to the second touch event specifically includes:
when the second touch event is the third swipe event, adjusting, by the terminal, the size of the first interface according to the swipe track corresponding to the second operation in the navigation area and the swipe direction corresponding to the second operation in the navigation area, and controlling, according to the swipe speed corresponding to the second operation in the navigation area, a speed of adjusting the size of the first interface; or
when the second touch event is the fourth swipe event, adjusting, by the terminal, the size of the first interface according to the type of the physical button touched in the second operation, the quantity of physical buttons touched in the second operation, the swipe track of the second operation on the physical button touched in the second operation, and the swipe direction of the second operation on the physical button touched in the second operation, and controlling, according to the swipe speed of the second operation on the physical button touched in the second operation, a speed of adjusting the size of the first interface; or
when the second touch event is the second touch-and-hold event, presenting, by the terminal, a first adjustable button in the first interface after determining that the type of the virtual button touched in the second operation matches a third preset type, and that the contact duration of the second operation on the virtual button touched in the second operation meets second preset duration, where the first adjustable button is configured to provide, for the user, an interface to adjust the size of the first interface; or
when the second touch event is the fifth swipe event, adjusting, by the terminal, the size of the first interface according to the swipe direction corresponding to the second operation in the adjustable area, and controlling, according to the swipe speed corresponding to the second operation in the adjustable area, a speed of adjusting the size of the first interface.

With reference to any one of the third possible implementation manner of the first aspect to the fifth possible implementation manner of the first aspect, in a sixth possible implementation manner of the first aspect, the method further includes:
obtaining a third operation input by the user, and determining a third touch event corresponding to the third operation, where the third touch event includes a sixth swipe event, in the adjustable area, that is collected by the terminal according to the third operation, or a third touch-and-hold event, in the first interface, that is collected by the terminal according to the third operation; and
adjusting a location of the first interface on the display according to the third touch event.

With reference to the sixth possible implementation manner of the first aspect, in a seventh possible implementation manner of the first aspect, the sixth swipe event includes a swipe speed corresponding to the third operation in the adjustable area, a swipe starting point corresponding to the third operation in the adjustable area, and a swipe direction corresponding to the third operation in the adjustable area; and
the third touch-and-hold event includes contact duration corresponding to the third operation in the first interface.

With reference to the seventh possible implementation manner of the first aspect, in an eighth possible implementation manner of the first aspect, the adjusting a location of the first interface on the display according to the third touch event specifically includes:
when the third touch event is the sixth swipe event, adjusting, by the terminal, the location of the first interface on the display according to the swipe starting point corresponding to the third operation in the adjustable area and the swipe direction corresponding to the third operation in the adjustable area, and controlling, according to the swipe speed corresponding to the third operation in the adjustable area, a speed of adjusting the location of the first interface; or
when the third touch event is the third touch-and-hold event, presenting, by the terminal, a second adjustable button in the first interface after determining that the contact duration corresponding to the third operation in the first interface meets third preset duration, where the second adjustable button is configured to provide, for the user, an interface to adjust the location of the first interface on the display.

According to a second aspect, an embodiment of the present invention provides a user interface of a terminal, where the terminal includes a physical button, a display, a memory, multiple application programs, and one or more processors that are configured to execute one or more programs stored in the memory, where the display includes a touch-sensitive surface and a display; and the user interface includes a second interface for displaying interface elements of the second interface, and a first interface for displaying elements of the first interface and for a user to operate with one hand, where the first interface is a scaled-down second interface, content of the elements of the first interface is the same as content of the interface elements of the second interface, and sizes of the interface elements of the first interface are sizes of the elements of the scaled-down second interface; where
the second interface for displaying the interface elements of the second interface includes:
displaying the second interface on the display, where the second interface includes the interface elements of the second interface and a navigation area of the touch-sensitive surface;
after a first operation is detected in the navigation area of the touch-sensitive surface or on the physical button, and a first touch event corresponding to the first operation is determined, responding to the first touch event, where the first touch event includes at least one of: a first swipe event, in the navigation area of the terminal, that is collected by the terminal according to the first operation; a second swipe event, on the physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
displaying the first interface on the display, where the first interface includes the interface elements of the first interface and a scaled-down navigation area.

According to a third aspect, an embodiment of the present invention provides a user interface of a terminal, where the terminal includes a physical button, a display, a memory, multiple application programs, and one or more processors that are configured to execute one or more programs stored in the memory, where the display includes a touch-sensitive surface and a display; and the user interface includes a second interface for displaying interface elements of the second interface, and a first interface for displaying interface elements of the first interface and for a user to operate with one hand, where content of the interface elements of the first interface is the same as that of some interface elements of the interface elements of the second interface, and sizes of the interface elements of the first interface are the same as sizes of the some interface elements; where
the second interface for displaying the interface elements of the second interface includes:
displaying the second interface on the display, where the second interface includes the interface elements of the second interface and a navigation area of the touch-sensitive surface;
after a first operation is detected in the navigation area of the touch-sensitive surface or on the physical button, and a first touch event corresponding to the first operation is determined, responding to the first touch event, where the first touch event includes at least one of: a first swipe event, in the navigation area of the terminal, that is collected by the terminal according to the first operation; a second swipe event, on the physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
displaying the first interface on the display, where the first interface includes the interface elements of the first interface and a scaled-down navigation area.

According to a fourth aspect, an embodiment of the present invention provides a terminal, including:
a first determining module, configured to obtain a first operation input by a user, and determine a first touch event corresponding to the first operation, where the first touch event includes at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
a display module, configured to present, in a preset area of a display of the terminal according to the first touch event, a first interface for the user to operate with one hand, where content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

With reference to the fourth aspect, in a first possible implementation manner of the fourth aspect, the first swipe event includes a swipe track corresponding to the first operation in the navigation area, a swipe speed corresponding to the first operation in the navigation area, and a swipe direction corresponding to the first operation in the navigation area;
the second swipe event includes a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation;
the double-tap event includes a type of the virtual button touched in the first operation, and a quantity of taps of the first operation on the virtual button touched in the first operation. The type of the virtual button includes a virtual home button, a virtual back button, and a virtual multitasking button; and
the first touch-and-hold event includes the type of the virtual button touched in the first operation, and contact duration of the first operation on the virtual button touched in the first operation.

With reference to the first possible implementation manner of the fourth aspect, in a second possible implementation manner of the fourth aspect, the display module is specifically configured to: when the first touch event is the first swipe event, after the first determining module determines that the swipe track corresponding to the first operation in the navigation area and the swipe speed corresponding to the first operation in the navigation area meet a first preset condition, present the first interface on the display according to the swipe direction corresponding to the first operation in the navigation area; or
the display module is specifically configured to: when the first touch event is the second swipe event, after the first determining module determines that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, present the first interface on the display according to the swipe direction of the first operation on the physical button touched in the first operation; or
the display module is specifically configured to: when the first touch event is the double-tap event, present the first interface on the display when the first determining module determines that the type of the virtual button touched in the first operation matches a first preset type, and that the virtual button touched in the first operation is tapped twice in the first operation; or
the display module is specifically configured to: when the first touch event is the first touch-and-hold event, present the first interface on the display when the first determining module determines that the type of the virtual button touched in the first operation matches a second preset type, and that the contact duration of the first operation on the virtual button touched in the first operation meets first preset duration.

With reference to any one of the fourth aspect, or the first or the second possible implementation manners of the fourth aspect, in a third possible implementation manner of the fourth aspect, the terminal further includes:
a second determining module, configured to: after the display module presents, in the preset area of the display of the terminal according to the first touch event, the first interface for the user to operate with one hand, obtain a second operation input by the user, and determine a second touch event corresponding to the second operation, where the second touch event includes at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, where the adjustable area is an area on the display other than the first interface; and
a size adjustment module, configured to adjust a size of the first interface according to the second touch event.

With reference to the third possible implementation manner of the fourth aspect, in a fourth possible implementation manner of the fourth aspect, the third swipe event includes a swipe track corresponding to the second operation in the navigation area, a swipe speed corresponding to the second operation in the navigation area, and a swipe direction corresponding to the second operation in the navigation area;
the fourth swipe event includes a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation;
the second touch-and-hold event includes a type of the virtual button touched in the second operation, and contact duration of the second operation on the virtual button touched in the second operation; and
the fifth swipe event includes a swipe direction corresponding to the second operation in the adjustable area, and a swipe speed corresponding to the second operation in the adjustable area.

With reference to the fourth possible implementation manner of the fourth aspect, in a fifth possible implementation manner of the fourth aspect, the size adjustment module is specifically configured to: when the second touch event is the third swipe event, adjust the size of the first interface according to the swipe track corresponding to the second operation in the navigation area and the swipe direction corresponding to the second operation in the navigation area that are determined by the second determining module, and control, according to the swipe speed that is corresponding to the second operation in the navigation area and is determined by the second determining module, a speed of adjusting the size of the first interface; or
the size adjustment module is specifically configured to: when the second touch event is the fourth swipe event, adjust the size of the first interface according to the type of the physical button touched in the second operation, the quantity of physical buttons touched in the second operation, the swipe track of the second operation on the physical button touched in the second operation, and the swipe direction of the second operation on the physical button touched in the second operation that are determined by the second determining module, and control, according to the swipe speed that is of the second operation on the physical button touched in the second operation and is determined by the second determining module, a speed of adjusting the size of the first interface; or
the size adjustment module is specifically configured to: when the second touch event is the second touch-and-hold event, after it is determined that the type that is of the virtual button touched in the second operation and is determined by the second determining module matches a third preset type, and the contact duration that is of the second operation on the virtual button touched in the second operation and is determined by the second determining module meets second preset duration, instruct the display module to present a first adjustable button in the first interface, where the first adjustable button is configured to provide, for the user, an interface to adjust the size of the first interface; or
the size adjustment module is specifically configured to: when the second touch event is the fifth swipe event, adjust the size of the first interface according to the swipe direction that is corresponding to the second operation in the adjustable area and is determined by the second determining module, and control, according to the swipe speed that is corresponding to the second operation in the adjustable area and is determined by the second determining module, a speed of adjusting the size of the first interface.

With reference to any one of the third possible implementation manner of the fourth aspect to the fifth possible implementation manner of the fourth aspect, in a sixth possible implementation manner of the fourth aspect, the terminal further includes:
a third determining module, configured to obtain a third operation input by the user, and determine a third touch event corresponding to the third operation, where the third touch event includes a sixth swipe event, in the adjustable area, that is collected by the terminal according to the third operation, or a third touch-and-hold event, in the first interface, that is collected by the terminal according to the third operation; and
a location adjustment module, configured to adjust a location of the first interface on the display according to the third touch event.

With reference to the sixth possible implementation manner of the fourth aspect, in a seventh possible implementation manner of the fourth aspect, the sixth swipe event includes a swipe speed corresponding to the third operation in the adjustable area, a swipe starting point corresponding to the third operation in the adjustable area, and a swipe direction corresponding to the third operation in the adjustable area; and
the third touch-and-hold event includes contact duration corresponding to the third operation in the first interface.

With reference to the seventh possible implementation manner of the fourth aspect, in an eighth possible implementation manner of the fourth aspect, the location adjustment module is specifically configured to: when the third touch event is the sixth swipe event, adjust the location of the first interface on the display according to the swipe starting point corresponding to the third operation in the adjustable area and the swipe direction corresponding to the third operation in the adjustable area that are determined by the third determining module, and control, according to the swipe speed that is corresponding to the third operation in the adjustable area and is determined by the third determining module, a speed of adjusting the location of the first interface; or
the location adjustment module is specifically configured to: when the third touch event is the third touch-and-hold event, after it is determined that the contact duration that is corresponding to the third operation in the first interface and is determined by the third determining module meets third preset duration, instruct the display module to present a second adjustable button in the first interface, where the second adjustable button is configured to provide, for the user, an interface to adjust the location of the first interface on the display.

According to a fifth aspect, an embodiment of the present invention provides a terminal, including:
an input device, configured to obtain a first operation input by a user;
a processor, configured to determine a first touch event corresponding to the first operation obtained by the input device, where the first touch event includes at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
a display, configured to present, in a preset area of the display of the terminal according to the first touch event determined by the processor, a first interface for the user to operate with one hand, where content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

With reference to the fifth aspect, in a first possible implementation manner of the fifth aspect, the first swipe event includes a swipe track corresponding to the first operation in the navigation area, a swipe speed corresponding to the first operation in the navigation area, and a swipe direction corresponding to the first operation in the navigation area;
the second swipe event includes a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation;
the double-tap event includes a type of the virtual button touched in the first operation, and a quantity of taps of the first operation on the virtual button touched in the first operation. The type of the virtual button includes a virtual home button, a virtual back button, and a virtual multitasking button; and
the first touch-and-hold event includes the type of the virtual button touched in the first operation, and contact duration of the first operation on the virtual button touched in the first operation.

With reference to the first possible implementation manner of the fifth aspect, in a second possible implementation manner of the fifth aspect, the display is specifically configured to: when the first touch event is the first swipe event, after the processor determines that the swipe track corresponding to the first operation in the navigation area and the swipe speed corresponding to the first operation in the navigation area meet a first preset condition, present the first interface on the display according to an indication that is performed by the processor based on the swipe direction corresponding to the first operation in the navigation area; or
the display is specifically configured to: when the first touch event is the second swipe event, after the processor determines that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, present the first interface on the display according to an indication that is performed by the processor based on the swipe direction of the first operation on the physical button touched in the first operation; or
the display is specifically configured to: when the first touch event is the double-tap event, present the first interface on the display when the processor determines that the type of the virtual button touched in the first operation matches a first preset type, and that the virtual button touched in the first operation is tapped twice in the first operation; or
the display is specifically configured to: when the first touch event is the first touch-and-hold event, present the first interface on the display when the processor determines that the type of the virtual button touched in the first operation matches a second preset type, and that the contact duration of the first operation on the virtual button touched in the first operation meets first preset duration.

With reference to any one of the fifth aspect, or the first or the second possible implementation manners of the fifth aspect, in a third possible implementation manner of the fifth aspect, the processor is further configured to: after the display presents the first interface for the user to operate with one hand, obtain a second operation input by the user, and determine a second touch event corresponding to the second operation; and adjust a size of the first interface according to the second touch event, where the second touch event includes at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, where the adjustable area is an area on the display other than the first interface.

With reference to the third possible implementation manner of the fifth aspect, in a fourth possible implementation manner of the fifth aspect, the third swipe event includes a swipe track corresponding to the second operation in the navigation area, a swipe speed corresponding to the second operation in the navigation area, and a swipe direction corresponding to the second operation in the navigation area;
the fourth swipe event includes a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation;
the second touch-and-hold event includes a type of the virtual button touched in the second operation, and contact duration of the second operation on the virtual button touched in the second operation; and
the fifth swipe event includes a swipe direction corresponding to the second operation in the adjustable area, and a swipe speed corresponding to the second operation in the adjustable area.

With reference to the fourth possible implementation manner of the fifth aspect, in a fifth possible implementation manner of the fifth aspect, the processor is specifically configured to: when the second touch event is the third swipe event, adjust the size of the first interface according to the swipe track corresponding to the second operation in the navigation area and the swipe direction corresponding to the second operation in the navigation area, and control, according to the swipe speed corresponding to the second operation in the navigation area, a speed of adjusting the size of the first interface; or
the processor is specifically configured to: when the second touch event is the fourth swipe event, adjust the size of the first interface according to the type of the physical button touched in the second operation, the quantity of physical buttons touched in the second operation, the swipe track of the second operation on the physical button touched in the second operation, and the swipe direction of the second operation on the physical button touched in the second operation, and control, according to the swipe speed of the second operation on the physical button touched in the second operation, a speed of adjusting the size of the first interface; or
the processor is specifically configured to: when the second touch event is the second touch-and-hold event, after determining that the type of the virtual button touched in the second operation matches a third preset type, and that the contact duration of the second operation on the virtual button touched in the second operation meets second preset duration, instruct the display to present a first adjustable button in the first interface, where the first adjustable button is configured to provide, for the user, an interface to adjust the size of the first interface; or
the processor is specifically configured to: when the second touch event is the fifth swipe event, adjust the size of the first interface according to the swipe direction corresponding to the second operation in the adjustable area, and control, according to the swipe speed corresponding to the second operation in the adjustable area, a speed of adjusting the size of the first interface.

With reference to any one of the third possible implementation manner of the fifth aspect to the fifth possible implementation manner of the fifth aspect, in a sixth possible implementation manner of the fifth aspect, the processor is further configured to: obtain a third operation input by the user, and determine a third touch event corresponding to the third operation; and adjust a location of the first interface on the display according to the third touch event, where the third touch event includes a sixth swipe event, in the adjustable area, that is collected by the terminal according to the third operation, or a third touch-and-hold event, in the first interface, that is collected by the terminal according to the third operation.

With reference to the sixth possible implementation manner of the fifth aspect, in a seventh possible implementation manner of the fifth aspect, the sixth swipe event includes a swipe speed corresponding to the third operation in the adjustable area, a swipe starting point corresponding to the third operation in the adjustable area, and a swipe direction corresponding to the third operation in the adjustable area; and
the third touch-and-hold event includes contact duration corresponding to the third operation in the first interface.

With reference to the seventh possible implementation manner of the fifth aspect, in an eighth possible implementation manner of the fifth aspect, the processor is specifically configured to: when the third touch event is the sixth swipe event, adjust the location of the first interface on the display according to the swipe starting point corresponding to the third operation in the adjustable area and the swipe direction corresponding to the third operation in the adjustable area, and control, according to the swipe speed corresponding to the third operation in the adjustable area, a speed of adjusting the location of the first interface; or
the processor is specifically configured to: when the third touch event is the third touch-and-hold event, after determining that the contact duration corresponding to the third operation in the first interface meets third preset duration, instruct the display to present a second adjustable button in the first interface, where the second adjustable button is configured to provide, for the user, an interface to adjust the location of the first interface on the display.

According to the method for processing a user interface of a terminal, the user interface, and the terminal that are provided in the embodiments of the present invention, a terminal may obtain a first touch event according to different first operations input by a user, and present, according to the first touch event, a first interface that can be operated by the user with one hand. That is, according to the method provided in the embodiments, the user may trigger, by using different first operations in a navigation area of the terminal, the terminal to generate the first interface, that is, the method provided in the embodiments of the present invention diversifies a manner of triggering the terminal to generate the first interface, brings more possibilities to user experience, and improves intelligence of human-machine interaction. In addition, according to the method provided in the embodiments of the present invention, the user may trigger, by using different first operations not only in the navigation area but also on a virtual button or a substantive button, the terminal to generate the first interface, which further diversifies the manner of triggering the terminal to generate a one-handed operation interface, brings more possibilities to user experience, and further improves intelligence of human-machine interaction.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of Embodiment 1 of a method for processing a user interface of a terminal according to an embodiment of the present invention;
FIG. 2 is a schematic diagram of a navigation area of a terminal in an Android system according to an embodiment of the present invention;
FIG. 3 is a schematic diagram 1 of a display effect of a first interface according to an embodiment of the present invention;
FIG 4 is a schematic diagram 2 of a display effect of a first interface according to an embodiment of the present invention;
FIG 5 is a schematic diagram 3 of a display effect of a first interface according to an embodiment of the present invention;
FIG 6 is a schematic diagram 4 of a display effect of a first interface according to an embodiment of the present invention;
FIG. 7 is a schematic diagram 5 of a display effect of a first interface according to an embodiment of the present invention;
FIG. 8 is a schematic diagram 6 of a display effect of a first interface according to an embodiment of the present invention;
FIG. 9 is a schematic diagram 7 of a display effect of a first interface according to an embodiment of the present invention;
FIG. 10 is a schematic diagram 8 of a display effect of a first interface according to an embodiment of the present invention;
FIG. 11 is a schematic diagram 9 of a display effect of a first interface according to an embodiment of the present invention;
FIG. 12 is a schematic diagram 10 of a display effect of a first interface according to an embodiment of the present invention;
FIG. 13 is a schematic diagram 11 of a display effect of a first interface according to an embodiment of the present invention;
FIG. 14 is a schematic diagram 12 of a display effect of a first interface according to an embodiment of the present invention;
FIG. 15 is a schematic diagram 13 of a display effect of a first interface according to an embodiment of the present invention;
FIG. 16 is a schematic flowchart of Embodiment 2 of a method for processing a user interface of a terminal according to the present invention;
FIG. 17 is a schematic diagram 14 of a display effect of a first interface according to an embodiment of the present invention;
FIG. 18 is a schematic diagram 15 of a display effect of a first interface according to an embodiment of the present invention;
FIG. 19 is a schematic diagram 16 of a display effect of a first interface according to an embodiment of the present invention;
FIG. 20 is a schematic diagram 17 of a display effect of a first interface according to an embodiment of the present invention;
FIG. 21 is a schematic flowchart of Embodiment 3 of a method for processing a user interface of a terminal according to the present invention;
FIG. 22 is a schematic diagram 18 of a display effect of a first interface according to an embodiment of the present invention;
FIG. 23 is a schematic diagram 19 of a display effect of a first interface according to an embodiment of the present invention;
FIG. 24 is a schematic structural diagram of Embodiment 1 of a terminal according to an embodiment of the present invention;
FIG. 25 is a schematic structural diagram of Embodiment 2 of a terminal according to an embodiment of the present invention;
FIG. 26 is a schematic structural diagram of Embodiment 3 of a terminal according to an embodiment of the present invention; and
FIG. 27 is a schematic structural diagram of Embodiment 4 of a terminal according to an embodiment of the present invention.

### DESCRIPTION OF EMBODIMENTS

To make the objectives, technical solutions, and advantages of embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A terminal mentioned in the embodiments of the present invention may include but is not limited to mobile communications devices such as a mobile phone, a personal digital assistant (Personal Digital Assistant, PDA), a tablet computer, a portable device (for example, a portable computer), or may include a device with a touchscreen, such as an automatic teller machine (Automatic Teller Machine, ATM), or may include a terminal with a touchscreen and physical buttons. This is not limited in the embodiments of the present invention.

A method mentioned in the embodiments of the present invention is to resolve a prior-art technical problem: a user can only implement a one-handed operation on a large-screen terminal with a single specific gesture, and a manner of generating a one-handed operation interface is onefold; and may further resolve a prior-art technical problem: there is a shortage of an adjustment manner of adjusting a size and a location of the generated one-handed operation interface, and human-machine interaction is not intelligent enough.

The following describes the technical solutions of the present invention in detail by using specific embodiments. The following several specific embodiments may be combined with each other, and a same or similar concept or process may not be described repeatedly in some embodiments.

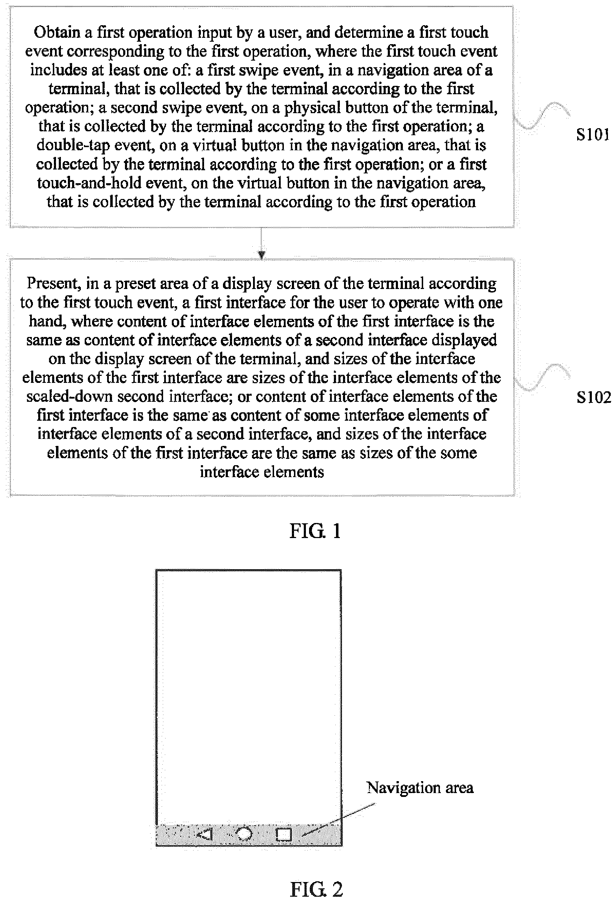

FIG. 1 is a schematic flowchart of Embodiment 1 of a method for processing a user interface of a terminal according to an embodiment of the present invention. This embodiment relates to a specific process in which a terminal presents a one-handed operation interface (that is, the following first interface) to a user by using a first operation input by the user and according to a first touch event associated with the first operation. As shown in FIG. 1, the method includes the following steps.

S101: Obtain a first operation input by a user, and determine a first touch event corresponding to the first operation, where the first touch event includes at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation.

Specifically, the terminal obtains the first operation input by the user, and the first operation may be a swipe operation performed by the user in the navigation area of the terminal, or may be a swipe operation performed by the user on the virtual button in the navigation area. For the swipe operation performed by the user in the navigation area, the user swipes up, down, left or right in the navigation area without pressing the virtual button in the navigation area. For the swipe operation on the virtual button, the user may press a virtual button in the navigation area and swipe up, down, left or right. Optionally, the first operation may be a swipe operation performed by the user on the physical button of the terminal (the swipe operation herein and an operation of pressing the physical button may be simultaneously performed), or may be a touch-and-hold operation on a touchscreen of the terminal, or may be a touch-and-hold operation on the physical button of the terminal, or the like. It should be noted that the foregoing navigation area may be a virtual navigation area in an Android system, for example, may be shown in FIG. 2; or the foregoing navigation area may be a task area bar provided with preset applications such as Messages and Phone in an iPhone operating system (iPhone Operating System, iOS for short). When the navigation area is the virtual navigation area in the Android system, the foregoing virtual button may be some virtual controls having same functions as substantive buttons, for example, "home button (home)" and "back button (back)" of the terminal. When the navigation area is the task area bar provided with the preset applications such as Messages and Phone in the iOS system, the virtual button may be some virtual icons in the task area bar, and the virtual icons include but are not limited to the preset applications such as Messages and Phone. The foregoing physical button refers to a substantive button on the terminal.

Optionally, the terminal may obtain, by using a preset user interface, the first operation input by the user, or may collect, by using some application software at an underlying layer, the first operation input by the user, or may collect, by using hardware such as a pressure sensor, a timer, or a speed sensor, the first operation input by the user. This embodiment of the present invention sets no limitation to an obtaining manner in which the terminal obtains the first operation input by the user.

After the terminal obtains the first operation input by the user, the terminal extracts, according to the first operation, a reference basis for presenting the first interface by the terminal, that is, obtains the first touch event. When the first operation is the swipe operation performed by the user in the virtual navigation area of the terminal, the first touch event determined by the terminal is the first swipe event. An Android mobile phone is used as an example, and a navigation area may be shown in FIG. 2. When the first operation is the swipe operation performed by the user on the physical button of the terminal, and the user touches at least one button in the swipe operation on the physical button, the first touch event determined by the terminal is the second swipe event. When the first operation is a double-tap operation performed by the user on the virtual button in the navigation area of the terminal, the first touch event determined by the terminal is the double-tap event. When the first operation is a touch-and-hold operation performed by the user on the virtual button in the navigation area, the first touch event determined by the terminal is the first touch-and-hold event.

S102: Present, in a preset area of a display of the terminal according to the first touch event, a first interface for the user to operate with one hand, where content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

Specifically, in the first touch event determined by the terminal, the terminal may obtain parameters related to the first touch event, such as a coordinate parameter, a time parameter, a speed parameter, a direction parameter, and a quantity of taps. These parameters may help the terminal to determine whether to generate the first interface, so as to help a user to perform a one-handed operation. The first interface may be simply understood as a small screen or a small window (compared with the display of the terminal).

Optionally, the content of the interface elements of the first interface may be the same as the content of the interface elements of the second interface displayed on the display, the sizes of the interface elements of the first interface are obtained by scaling down the sizes of the interface elements of the original second interface, and a size of the first interface (that is, a window size of the first interface) is a size of the scaled-down second interface. For a scale, a value of the scale may be preset in the terminal (for example, a transform value may be preset in a processor inside the terminal), and the transform value includes compression ratios of the window in a horizontal direction and in a vertical direction, so that the terminal may implement, according to the transform value, a function of scaling down the first interface and the interface elements of the first interface at any ratio.

Optionally, the content of the interface elements of the first interface may be the same as content of some interface elements of the interface elements of the second interface, the sizes of the interface elements of the first interface are the same as the sizes of the some interface elements, and a size of the first interface (that is, a window size of the first interface) is smaller than a size of the second interface. This case may be understood as follows: A display location and the sizes of the interface elements of the second interface on the display remain unchanged, and the generated first interface may be displayed above the second interface on the display. The first interface may be an independent window (similar to a screenshot window in instant messaging software), the window includes some interface elements of the second interface on the display, and when the user operates the first interface with one hand, interface elements that can be touched by a finger are only some interface elements in the first interface.

It should be noted that, both the content of the interface elements of the first interface and the content of the interface elements of the second interface may be some application software APP on the terminal or may be some option switches. In addition, that the content of the interface elements of the first interface is the same as the content of the interface elements of the second interface may be that functions of the interface elements or icons of APPs or icons of option switches may be the same. For example, when content of an interface element of the first interface is a WeChat icon, and content of an interface element of the second interface is also a WeChat icon, it indicates that the content of the interface element of the first interface is the same as the content of the interface element of the second interface.

According to the method for processing a user interface of a terminal provided in this embodiment of the present invention, a terminal may obtain a first touch event according to different first operations input by a user, and present, according to the first touch event, a first interface that can be operated by the user with one hand. That is, according to the method provided in this embodiment, the user may trigger, by using different first operations in a navigation area of the terminal, the terminal to generate the first interface, that is, the method provided in this embodiment of the present invention diversifies a manner of triggering the terminal to generate the first interface, brings more possibilities to user experience, and improves intelligence of human-machine interaction. In addition, according to the method provided in this embodiment of the present invention, the user may trigger, by using different first operations not only in the navigation area but also on a virtual button or a substantive button, the terminal to generate the first interface, which further diversifies the manner of triggering the terminal to generate a one-handed operation interface, brings more possibilities to user experience, and further improves intelligence of human-machine interaction.

Further, based on the foregoing embodiment, this embodiment relates to an execution process in which the terminal determines specific content of the first touch event according to the first operation. Specifically, when the terminal determines the first touch event according to the first operation, the terminal actually determines values of some parameters brought by the first operation.

When the first operation is the swipe operation performed by the user in the virtual navigation area of the terminal, the first touch event determined by the terminal is the first swipe event. In the first swipe event, the terminal actually determines specific parameters in the first swipe event, and the parameters include a swipe track corresponding to the first operation in the navigation area, a swipe speed corresponding to the first operation in the navigation area, and a swipe direction corresponding to the first operation in the navigation area.

When the first operation is the swipe operation performed by the user on the physical button of the terminal, and the user touches at least one button in the swipe operation on the physical button, the first touch event determined by the terminal is the second swipe event. In the second swipe event, the terminal actually determines specific parameters in the second swipe event, and the parameters include a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation.

When the first operation is the double-tap operation performed by the user on the virtual button in the navigation area of the terminal, the first touch event determined by the terminal is the double-tap event. In the double-tap event, the terminal actually determines specific parameters in the double-tap event, and the parameters include a type of the virtual button touched in the first operation, and a quantity of taps of the first operation on the virtual button touched in the first operation. The type of the virtual button includes a virtual home button, a virtual back button, and a virtual multitasking button.

When the first operation is the touch-and-hold operation performed by the user on the virtual button in the navigation area, the first touch event determined by the terminal is the first touch-and-hold event. In the first touch-and-hold event, the terminal actually determines specific parameters in the first touch-and-hold event, and the parameters include the type of the virtual button touched in the first operation, and contact duration of the first operation on the virtual button touched in the first operation.

Based on the foregoing embodiment, in a possible implementation manner of this embodiment of the present invention, this embodiment relates to a specific process in which the terminal presents the first interface on the display according to the first swipe event when the first touch event is the first swipe event. That is, the step S102 specifically includes: after determining that the swipe track corresponding to the first operation in the navigation area and the swipe speed corresponding to the first operation in the navigation area meet a first preset condition, the terminal presents the first interface on the display according to the swipe direction corresponding to the first operation in the navigation area.

Specifically, the terminal receives the first operation input by the user, and the first operation is the swipe operation performed by the user in the navigation area of the terminal, so that the terminal may determine the first swipe event according to the swipe operation. It should be noted that the first swipe event may include multiple independent events, for example, may include one DOWN event (DOWN Event), multiple continuous MOVE events (MOVE Event), and one UP event (UP Event), and each event includes various types of information in this event, such as event coordinates, an event type, an event time, and an event flag (Event flag).

The terminal may determine, according to the DOWN event and the UP event in the first swipe event, the swipe track (that is, a swipe distance) corresponding to the first operation in the navigation area. For example, the terminal may calculate, according to a difference between coordinates of the DOWN event and coordinates of the UP event, the swipe track corresponding to the first operation in the navigation area; or the terminal may determine, according to the DOWN event, the MOVE events, and the UP event, the swipe track corresponding to the first operation in the navigation area (the first swipe event in this case includes multiple continuous MOVE events whose tracks are overlapped), and the swipe track in this case may be understood as total swipe displacement. At the same time, the terminal may further obtain a time at which the DOWN event occurs and a time at which the UP event occurs in the first swipe event, to obtain, by means of calculation, a time consumed by the entire first swipe event; and then obtain, by means of calculation according to the total swipe track and the time consumed by the first swipe event, the swipe speed corresponding to the first operation in the navigation area.

After determining the swipe track corresponding to the first operation in the navigation area and the swipe speed corresponding to the first operation in the navigation area, the terminal determines whether the swipe track and the swipe speed meet the first preset condition. The first preset condition includes a first threshold range that the swipe track corresponding to the first operation in the navigation area should meet and a second threshold range that the swipe speed corresponding to the first operation in the navigation area should meet. Only after determining that the swipe track corresponding to the first operation in the navigation area meets the first threshold range and the swipe speed corresponding to the first operation in the navigation area meets the second threshold range, the terminal presents the first interface on the display according to the swipe direction corresponding to the first operation in the navigation area.

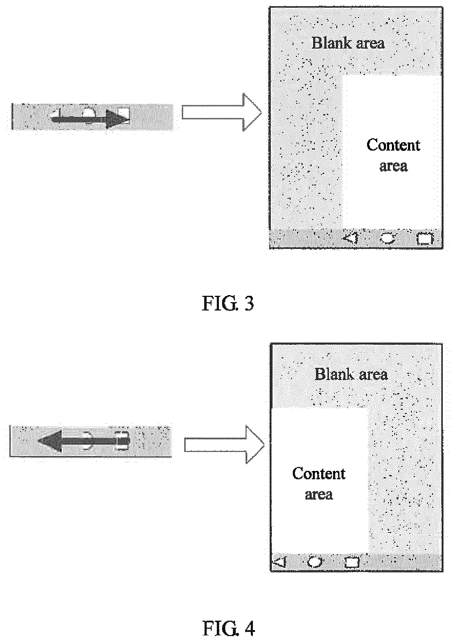

For example, as shown in FIG. 3, when the first operation performed by the user in the navigation area is swiping from left to right, that is, the swipe direction that is corresponding to the first operation in the navigation area and is in the first swipe event determined by the terminal is from left to right, and the terminal records coordinates and a press time point of a DOWN event at a moment when the user presses with a finger, and records coordinates and a lift time point of an UP event at a moment when the finger lifts up after swiping. Then the terminal may obtain, by means of calculation according to a difference between the coordinates of the DOWN event and the coordinates of the UP event, the swipe track corresponding to the first operation in the navigation area, and may obtain, by means of calculation according to a difference between the press time point of the DOWN event and the lift time point of the UP event, a swipe time corresponding to the first operation in the navigation area, so as to obtain the swipe speed corresponding to the first operation in the navigation area. Afterwards, the terminal determines whether the swipe track corresponding to the first operation in the navigation area and the swipe speed corresponding to the first operation in the navigation area meet the first preset condition. If the swipe track corresponding to the first operation in the navigation area and the swipe speed corresponding to the first operation in the navigation area meet the first preset condition, the terminal presents the first interface on the display according to the left-to-right swipe direction corresponding to the first operation in the navigation area. Optionally, the first interface may be displayed at the right side of the display (as shown in FIG. 3). In FIG. 3, a window of a "content area" is the first interface, and a blank area is an area on the display other than the first interface. The blank area may be provided with no content, or may be provided with some function option switches for the user to set some parameter values, for example, to set luminance and a color of an icon in the content area, as long as it is ensured that content set in the blank area is different from content of interface elements in the content area. This is true of a "content area" and a "blank area" in all the following accompanying drawings. When the first operation performed by the user in the navigation area is swiping from right to left, the first interface may be displayed at the left side of the display (as shown in FIG. 4). It should be noted that, when the first operation is a swipe operation, a swipe direction corresponding to the first operation in the navigation area may be in a one-to-one correspondence with a location of the first interface presented on the display, or a correspondence between a swipe direction corresponding to the first operation in the navigation area and a location of the first interface presented on the display may not be limited. It should be noted that, in FIG. 3, if the user swipes from left to right in the navigation area, the terminal presents the first interface on the display, and then if the user continues to swipe from right to left in the navigation area, the terminal restores the original second interface. In FIG. 4, after the first interface is presented, a process of restoring the original interface is similar to that in FIG. 3, and a swipe direction only needs to be opposite to a swipe direction of a swipe operation that triggers the terminal to present the first interface.

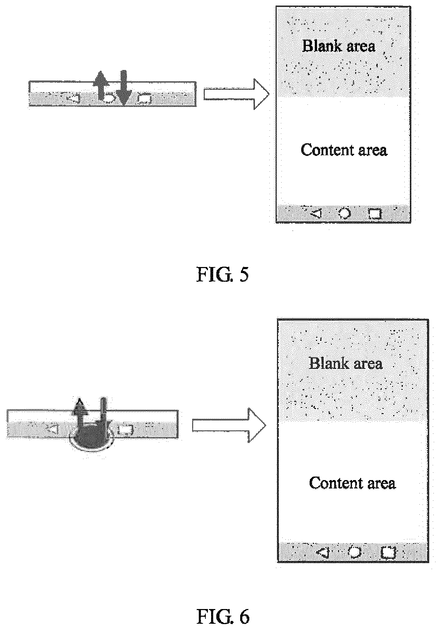

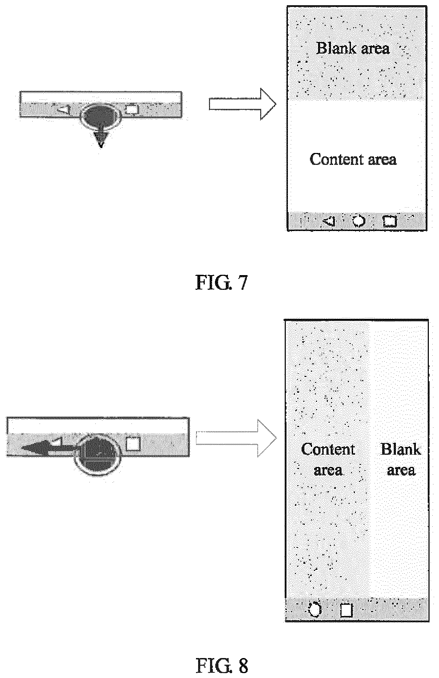

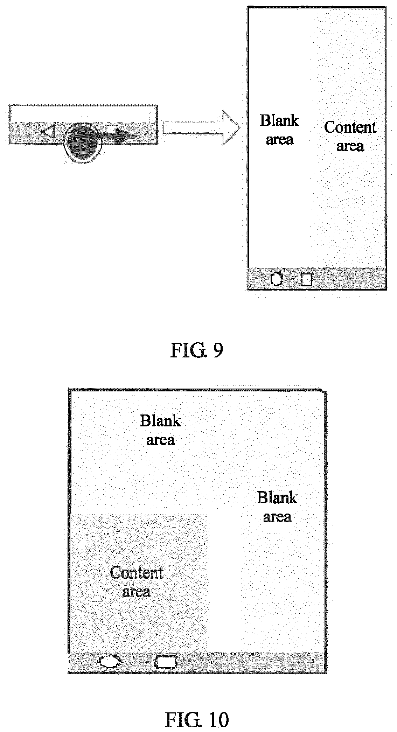

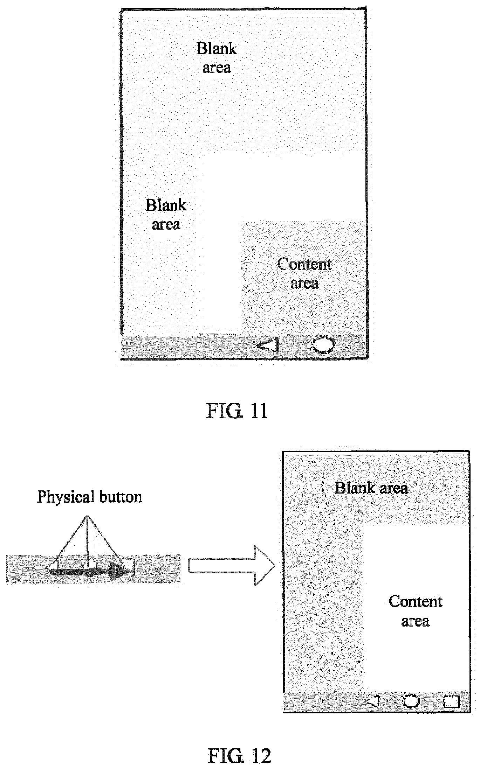

Optionally, when the first operation is swiping up and down in the navigation area by the user, an effect diagram of the first interface presented by the terminal may be shown in FIG. 5. When the first operation is pressing a virtual button in the navigation area and swiping up and back to the virtual button by the user, an effect diagram of the first interface presented by the terminal may be shown in FIG. 6. When the first operation is pressing a virtual button in the navigation area and swiping down by the user, an effect diagram of the first interface presented by the terminal may be shown in FIG. 7. When the first operation is pressing a virtual button in the navigation area and swiping left by the user, an effect diagram of the first interface presented by the terminal may be shown in FIG. 8. When the first operation is pressing a virtual button in the navigation area and swiping right by the user, an effect diagram of the first interface presented by the terminal may be shown in FIG. 9. When the first operation is any one of swiping up and down in the navigation area by the user, pressing a virtual button in the navigation area and swiping up and back to the virtual button by the user, or pressing a virtual button in the navigation area and swiping down by the user, in combination with an operation of swiping left or right in the navigation area by the user, or pressing a virtual button in the navigation area and swiping left or right by the user, the first interface presented by the terminal may be shown in FIG. 10 or FIG. 11.

Based on the foregoing embodiment, in another possible implementation manner of this embodiment of the present invention, this embodiment relates to a specific process in which the terminal presents the first interface on the display according to the second swipe event when the first touch event is the second swipe event. That is, the step S102 specifically includes: after determining that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, the terminal presents the first interface on the display according to the swipe direction of the first operation on the physical button touched in the first operation.

Specifically, the terminal receives the first operation input by the user, and the first operation is the swipe operation performed by the user on the physical button of the terminal, so that the terminal determines the second swipe event according to the swipe operation. It should be noted that the second swipe event may also include multiple independent events, for example, may include one DOWN event (DOWN Event), multiple continuous MOVE events (MOVE Event), and one UP event (UP Event), and each event includes various types of information in this event, such as event coordinates, an event type, an event time, and an event flag (Event flag).

The terminal may determine, according to the DOWN event and the UP event in the second swipe event, the swipe track (that is, a swipe distance) of the first operation on the physical button touched in the first operation, or may determine, according to the DOWN event, the MOVE events, and the UP event, the swipe track corresponding to the first operation on the physical button. The terminal may further determine the swipe speed of the first operation on the physical button touched in the first operation. For a specific determining manner, refer to a specific process of determining the swipe track and the swipe speed that are corresponding to the first operation in the navigation area in the first possible implementation manner, and details are not repeatedly described herein. At the same time, the terminal may further determine, according to coordinates of the DOWN event or the UP event or the MOVE events, the type of the physical button touched in the first operation and the quantity of physical buttons touched in the first operation.

Therefore, after determining the type of the physical button touched in the first operation, the quantity of physical buttons touched in the first operation, the swipe track of the first operation on the physical button touched in the first operation, and the swipe speed of the first operation on the physical button touched in the first operation, the terminal determines whether the four parameters meet the second preset condition. If the type of the physical button touched in the first operation, the quantity of physical buttons touched in the first operation, the swipe track of the first operation on the physical button touched in the first operation, and the swipe speed of the first operation on the physical button touched in the first operation meet the second preset condition, the terminal presents the first interface on the display according to the swipe direction of the first operation on the physical button touched in the first operation. Optionally, the second preset condition includes a third threshold range that the swipe track corresponding to the first operation on the physical button should meet, a fourth threshold range that the swipe speed corresponding to the first operation on the physical button should meet, a preset physical button type that the physical button touched in the first operation should meet (the physical button type may be a physical home button, a physical back button, a physical volume button, and the like), and a fifth threshold range that the quantity of physical buttons touched in the first operation should meet (the fifth threshold range is generally greater than or equal to 1). Only after determining that the swipe track corresponding to the first operation on the physical button meets the third threshold range, the swipe speed corresponding to the first operation in the navigation area meets the fourth threshold range, the physical button touched in the first operation meets the preset physical button type, and the quantity of physical buttons touched in the first operation meets the fifth threshold range, the terminal presents the first interface on the display according to the swipe direction corresponding to the first operation on the physical button.

In addition, the third threshold range may be the same as or different from the first threshold range, and the fourth threshold range may be the same as or different from the second threshold range.

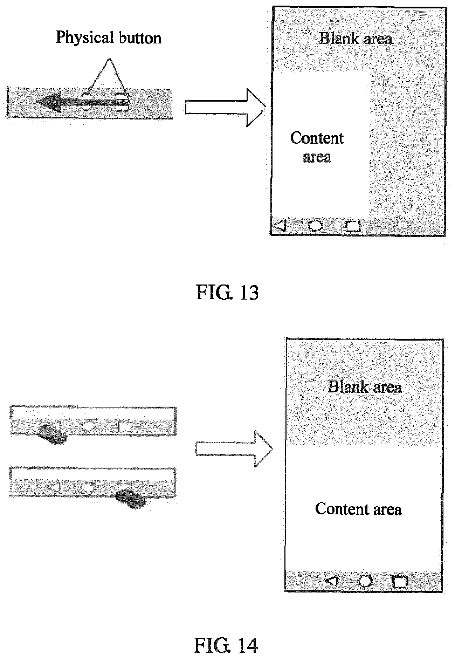

Optionally, when the first operation is pressing a physical button and simultaneously swiping from left to right by the user (when swiping is performed from left to right, another physical button needs to be touched), an effect diagram of the first interface presented by the terminal may be shown in FIG. 12. When the first operation is pressing a physical button and simultaneously swiping from right to left by the user (when swiping is performed from right to left, another physical button needs to be touched), an effect diagram of the first interface presented by the terminal may be shown in FIG. 13. When the first operation is any one of operations: swiping up and down in the navigation area by the user, pressing a virtual button in the navigation area and swiping up and back to the virtual button by the user, or pressing a virtual button in the navigation area and swiping down by the user, in combination with an operation of swiping left or right on the physical button by the user, the first interface presented by the terminal may be shown in FIG. 10 or FIG. 11.

Based on the foregoing embodiment, in a third possible implementation manner of this embodiment of the present invention, this embodiment relates to a specific process in which the terminal presents the first interface on the display according to the double-tap event when the first touch event is the double-tap event. That is, the step S102 specifically includes: the terminal presents the first interface on the display when determining that the type of the virtual button touched in the first operation matches a first preset type, and that the virtual button touched in the first operation is tapped twice in the first operation.

Specifically, the terminal receives the first operation input by the user, and the first operation is a tap operation performed by the user on the virtual button of the terminal, so that the terminal determines the double-tap event according to the tap operation. It should be noted that the terminal may determine the type of the tapped virtual button according to coordinates of a DOWN event involved in the tap operation, and may determine, according to a voltage or current status of a touchscreen at the coordinate location, the quantity of taps performed by the user on the virtual button.

Afterwards, the terminal determines whether the type of the virtual button touched in the first operation matches the first preset type. The first preset type may be any one or more virtual button types, for example, may be a virtual home button and virtual back button. Assuming that the terminal determines that the type of the virtual button touched in the first operation is the virtual home button, it indicates that the type of the virtual button touched in the first operation matches the first preset type, then the terminal further determines whether the virtual button touched in the first operation is tapped twice, and if the virtual button touched in the first operation is tapped twice, the terminal presents the first interface on the display. Optionally, when the terminal is a mobile phone, if the first operation is double-tapping a back button or double-tapping a multitasking button by the user, an effect diagram of the first interface presented by the terminal may be shown in FIG 14. When the first operation is double-tapping the virtual button by the user, in combination with an operation of swiping left or right in the navigation area or on the physical button by the user, or pressing a virtual button in the navigation area and swiping left or right by the user, the first interface presented by the terminal may be shown in FIG. 10 or FIG. 11.

Based on the foregoing embodiment, in a fourth possible implementation manner of this embodiment of the present invention, this embodiment relates to a specific process in which the terminal presents the first interface on the display according to the first touch-and-hold event when the first touch event is the first touch-and-hold event. That is, the step S102 specifically includes: the terminal presents the first interface on the display when determining that the type of the virtual button touched in the first operation matches a second preset type, and that the contact duration of the first operation on the virtual button touched in the first operation meets first preset duration.

Specifically, the terminal receives the first operation input by the user, and the first operation is the touch-and-hold operation performed by the user on the virtual button of the terminal, so that the terminal determines the first touch-and-hold event according to the touch-and-hold operation. It should be noted that, the terminal may determine, according to coordinates of a DOWN event involved in the touch-and-hold operation, the type of the virtual button touched in the first operation, and may determine, according to voltage duration or current duration of a touchscreen at the coordinate location, the contact duration of the first operation on the virtual button touched in the first operation.

Afterwards, the terminal determines whether the type of the virtual button touched in the first operation matches the second preset type. The second preset type may be the same as or different from the first preset type. If the type of the virtual button touched in the first operation matches the second preset type, the terminal further determines whether the contact duration of the first operation on the virtual button touched in the first operation meets the first preset duration. If the contact duration of the first operation on the virtual button touched in the first operation meets the first preset duration, the terminal presents the first interface on the display. Optionally, the first preset duration may be preconfigured by the user by using software after factory delivery of the terminal, or the first preset duration may be loaded into a processor by using a fixture at factory delivery of the terminal.

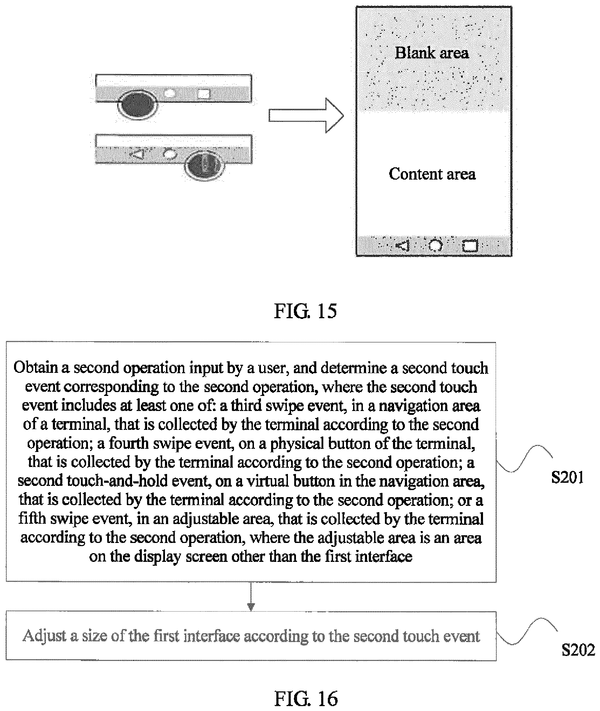

Optionally, when the terminal is a mobile phone, if the first operation is touching and holding a back button or touching and holding a multitasking button by the user, an effect diagram of the first interface presented by the terminal may be shown in FIG. 15. When the first operation is touching and holding the virtual button, in combination with an operation of swiping left or right in the navigation area or on the physical button by the user, or pressing a virtual button in the navigation area and swiping left or right by the user, the first interface presented by the terminal may be shown in FIG. 10 or FIG. 11.

According to the method for processing a user interface of a terminal provided in this embodiment of the present invention, a terminal may obtain a first touch event according to different first operations input by a user, and generate, according to the first touch event, a first interface that can be operated by the user with one hand. That is, according to the method provided in this embodiment, the user may trigger, by using different first operations in a navigation area of the terminal, the terminal to generate the first interface, that is, the method provided in this embodiment of the present invention diversifies a manner of triggering the terminal to generate the first interface, brings more possibilities to user experience, and improves intelligence of human-machine interaction. In addition, according to the method provided in this embodiment of the present invention, the user may trigger, by using different first operations not only in the navigation area but also on a virtual button or a substantive button, the terminal to generate the first interface, which further diversifies the manner of triggering the terminal to generate a one-handed operation interface, brings more possibilities to user experience, and further improves intelligence of human-machine interaction.

FIG. 16 is a schematic flowchart of Embodiment 2 of a method for processing a user interface of a terminal according to the present invention. This embodiment relates to a specific process in which a terminal adjusts a size of a first interface according to a second operation input by a user. Based on the foregoing embodiment, after the step S102, the method further includes the following steps.

S201: Obtain a second operation input by the user, and determine a second touch event corresponding to the second operation, where the second touch event includes at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, where the adjustable area is an area on the display other than the first interface.

Specifically, for a manner in which the terminal obtains the second operation input by the user, refer to a specific process in which the terminal obtains the first operation input by the user in the step S101. For a process in which the terminal determines the second touch event according to the second operation, refer to a process in which the terminal determines the first touch event according to the first operation in the step S101. Details are not repeatedly described in this embodiment of the present invention. The fifth swipe event may be an event triggered by a swipe operation that is performed by the user in the area (that is, the adjustable area) on the display other than the first interface after the terminal presents the first interface on the display.

When the second operation is a swipe operation performed by the user in the virtual navigation area of the terminal, the second touch event determined by the terminal is the third swipe event. In the third swipe event, the terminal actually determines specific parameters in the third swipe event, and the parameters include a swipe track corresponding to the second operation in the navigation area, a swipe speed corresponding to the second operation in the navigation area, and a swipe direction corresponding to the second operation in the navigation area.

When the second operation is a swipe operation performed by the user on the physical button of the terminal, and the user touches at least one button in the swipe operation on the physical button, the second touch event determined by the terminal is the fourth swipe event. In the fourth swipe event, the terminal actually determines specific parameters in the fourth swipe event, and the parameters include a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation.

When the second operation is a touch-and-hold operation performed by the user on the virtual button in the navigation area, the second touch event determined by the terminal is the second touch-and-hold event. In the second touch-and-hold event, the terminal actually determines specific parameters in the second touch-and-hold event, and the parameters include the type of the virtual button touched in the second operation, and contact duration of the second operation on the virtual button touched in the second operation.

When the second operation is a swipe operation performed by the user in the adjustable area corresponding to the second operation, the second touch event determined by the terminal is the fifth swipe event. In the fifth swipe event, the terminal actually determines specific parameters in the fifth swipe event, and the parameters include a swipe direction corresponding to the second operation in the adjustable area, and a swipe speed corresponding to the second operation in the adjustable area.

It should be noted that the second operation in this embodiment may the same as or different from the first operation. The third swipe event may the same as or different from the first swipe event, the fourth swipe event may the same as or different from the second swipe event, and the second touch-and-hold event may the same as or different from the first touch-and-hold event.

S202: Adjust the size of the first interface according to the second touch event.

Specifically, the size of the first interface may be adjusted according to the second touch event in the following several possible implementation manners.

In a first possible implementation manner, when the second touch event is the third swipe event, the terminal adjusts the size of the first interface according to the swipe track corresponding to the second operation in the navigation area and the swipe direction corresponding to the second operation in the navigation area, and controls, according to the swipe speed corresponding to the second operation in the navigation area, a speed of adjusting the size of the first interface.

Specifically, after the terminal presents the first interface, the terminal receives the second operation input by the user, and the second operation is the swipe operation performed by the user in the navigation area of the terminal, so that the terminal determines the third swipe event according to the swipe operation. It should be noted that, similar to the first swipe event or the second swipe event, the third swipe event may also include multiple independent events, and details are not repeatedly described herein.

The terminal may determine, according to a DOWN event and an UP event in the third swipe event, the swipe track (that is, a swipe distance) corresponding to the second operation in the navigation area. For example, the terminal may calculate, according to a difference between coordinates of the DOWN event and coordinates of the UP event, the swipe track corresponding to the second operation in the navigation area; or the terminal may determine, according to a DOWN event, MOVE events, and an UP event, the swipe track corresponding to the second operation in the navigation area (the third swipe event in this case includes multiple continuous MOVE events whose tracks are overlapped), and the swipe track in this case may be understood as total swipe displacement. In addition, the terminal may further obtain a time at which the DOWN event occurs and a time at which the UP event occurs in the third swipe event, to obtain, by means of calculation, a time consumed by the entire third swipe event; and then obtain, by means of calculation according to the total swipe track and the time consumed by the third swipe event, the swipe speed corresponding to the second operation in the navigation area.

After determining the swipe track corresponding to the second operation in the navigation area and the swipe speed corresponding to the second operation in the navigation area, the terminal adjusts the size of the first interface according to the swipe track corresponding to the second operation in the navigation area and the swipe direction corresponding to the second operation in the navigation area. The swipe track corresponding to the second operation in the navigation area determines an amount of adjusting the size of the first interface, the swipe direction corresponding to the second operation in the navigation area determines a direction of adjusting the size of the first interface, and the swipe speed corresponding to the second operation in the navigation area determines the speed of adjusting the size of the first interface.

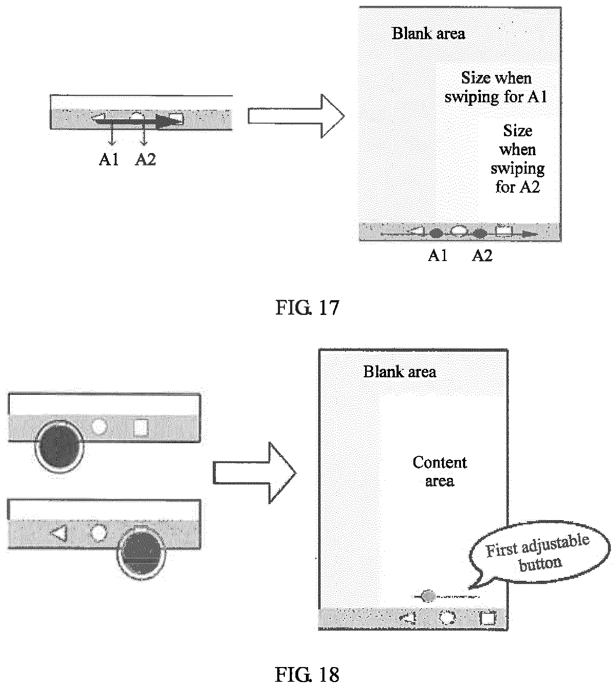

Optionally, when the second operation performed by the user in the navigation area is swiping from left to right, if swipe distances are respectively A1 and A2, a comparison diagram of effects of adjusting the first interface may be shown in FIG. 17.

In a second possible implementation manner, when the second touch event is the fourth swipe event, the terminal adjusts the size of the first interface according to the type of the physical button touched in the second operation, the quantity of physical buttons touched in the second operation, the swipe track of the second operation on the physical button touched in the second operation, and the swipe direction of the second operation on the physical button touched in the second operation, and controls, according to the swipe speed of the second operation on the physical button touched in the second operation, a speed of adjusting the size of the first interface.

Specifically, after the terminal presents the first interface, the terminal receives the second operation input by the user, and the second operation is the swipe operation performed by the user on the physical button of the terminal, so that the terminal determines the fourth swipe event according to the swipe operation. It should be noted that, similar to the third swipe event, the fourth swipe event may also include multiple independent events, and details are not repeatedly described herein.

The terminal may determine, according to a DOWN event and an UP event in the fourth swipe event, the swipe track (that is, a swipe distance) of the second operation on the physical button touched in the second operation, or may determine, according to a DOWN event, MOVE events, and an UP event, the swipe track corresponding to the second operation on the physical button. The terminal may further determine the swipe speed of the second operation on the physical button touched in the second operation. For a specific determining manner, refer to a specific process of determining the swipe track and the swipe speed that are corresponding to the second operation in the navigation area in the first possible implementation manner in the foregoing Embodiment 2, and details are not repeatedly described herein. At the same time, the terminal may further determine, according to coordinates of the DOWN event or the UP event or the MOVE events, the type of the physical button touched in the second operation and the quantity of physical buttons touched in the second operation.

Afterwards, the terminal adjusts the size of the first interface according to the type of the physical button touched in the second operation, the quantity of physical buttons touched in the second operation, the swipe track of the second operation on the physical button touched in the second operation, and the swipe direction of the second operation on the physical button touched in the second operation. The type of the physical button touched in the second operation and the quantity of physical buttons touched in the second operation determine whether the terminal adjusts the size of the first interface, the swipe track corresponding to the second operation on the physical button determines an amount of adjusting the size of the first interface, the swipe direction corresponding to the second operation on the physical button determines a direction of adjusting the size of the first interface, and the swipe speed corresponding to the second operation on the physical button determines the speed of adjusting the size of the first interface.

Optionally, when the second operation performed by the user on the physical button is swiping from left to right, if swipe distances are respectively A1 and A2, a comparison diagram of effects of adjusting the first interface may be shown in FIG. 17.

In a third possible implementation manner: when the second touch event is the second touch-and-hold event, the terminal presents a first adjustable button in the first interface after determining that the type of the virtual button touched in the second operation matches a third preset type, and that the contact duration of the second operation on the virtual button touched in the second operation meets second preset duration. The first adjustable button is configured to provide, for the user, an interface to adjust the size of the first interface.

Specifically, after the terminal presents the first interface, the terminal receives the second operation input by the user, and the second operation is the touch-and-hold operation performed by the user on the virtual button of the terminal, so that the terminal determines the second touch-and-hold event according to the touch-and-hold operation. It should be noted that, the terminal may determine, according to coordinates of a DOWN event involved in the touch-and-hold operation, the type of the virtual button touched in the second operation, and may determine, according to voltage duration or current duration of a touchscreen at the coordinate location, the contact duration of the second operation on the virtual button touched in the second operation.

Afterwards, the terminal determines whether the type of the virtual button touched in the second operation matches the third preset type. The third preset type may be the same as or different from the first preset type. If the type of the virtual button touched in the second operation matches the third preset type, the terminal further determines whether the contact duration of the second operation on the virtual button touched in the second operation meets the second preset duration; if the contact duration of the second operation on the virtual button touched in the second operation meets the second preset duration, the terminal presents the first adjustable button in the first interface. The first adjustable button is configured to provide, for the user, the interface to adjust the size of the first interface, and the user adjusts the size of the first interface according to the first adjustable button.

Optionally, when the terminal is a mobile phone, if the second operation is touching and holding a back button or touching and holding a multitasking button or touching and holding a home button by the user, an effect diagram of the first interface and the first adjustable button that are presented by the terminal may be shown in FIG. 18.

In a fourth possible implementation manner: when the second touch event is the fifth swipe event, the terminal adjusts the size of the first interface according to the swipe direction corresponding to the second operation in the adjustable area, and controls, according to the swipe speed corresponding to the second operation in the adjustable area, a speed of adjusting the size of the first interface.

Specifically, after the terminal presents the first interface, the terminal receives the second operation input by the user, and the second operation is the swipe operation performed by the user in the adjustable area of the terminal, so that the terminal determines the fifth swipe event according to the swipe operation. It should be noted that, similar to the third swipe event or the fourth swipe event, the fifth swipe event may also include multiple independent events, and details are not repeatedly described herein. In addition, the swipe operation performed by the user in the adjustable area of the terminal may be performed by the user based on a boundary line of the first interface (that is, the size of the first interface is adjusted by dragging a boundary of the first interface), or the size of the first interface may be adjusted by swiping at another location of the adjustable area. For a manner in which the terminal determines the swipe speed corresponding to the second operation in the adjustable area, refer to the description in the foregoing embodiment, and details are not repeatedly described herein again.

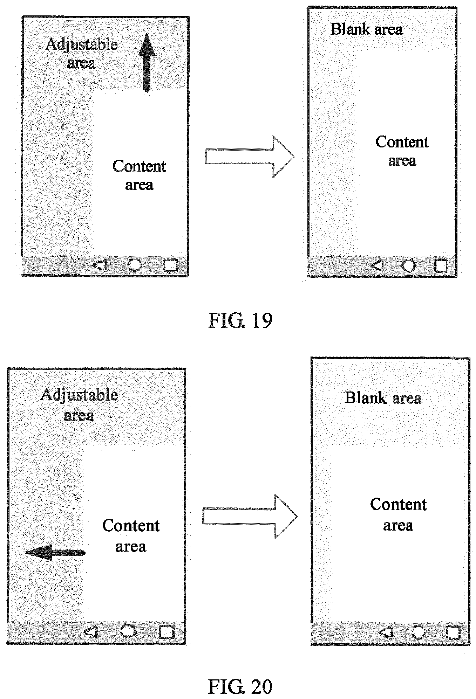

Afterwards, the terminal adjusts the size of the first interface according to the swipe direction corresponding to the second operation in the adjustable area, and controls, according to the swipe speed corresponding to the second operation in the adjustable area, the speed of adjusting the size of the first interface. For example, as shown in FIG. 19, if the swipe direction corresponding to the second operation in the adjustable area is swiping up along a horizontal boundary line of the first interface, the first interface is stretched upwards, and a vertical length of the first interface is increased. As shown in FIG. 20, if the swipe direction corresponding to the second operation in the adjustable area is swiping left along a vertical boundary line of the first interface, the first interface is stretched leftwards, and a horizontal length of the first interface is increased.

According to the method for processing a user interface of a terminal provided in this embodiment of the present invention, a terminal may obtain a first touch event according to different first operations input by a user, and generate, according to the first touch event, a first interface that can be operated by the user with one hand. After presenting the first interface to the user, the terminal may further obtain a second touch event by using different second operations input by the user, and adjust a size of the first interface according to the second touch event. That is, according to the method provided in this embodiment, the terminal may be triggered, by using different first operations, to generate the first interface, and may further adjust the size of the first interface by using different second operations, which facilitates a one-handed operation performed by the user. Therefore, a manner of triggering the terminal to present a one-handed operation interface and a manner of adjusting the one-handed operation interface are diversified, more possibilities are brought to user experience, and intelligence of human-machine interaction is improved.

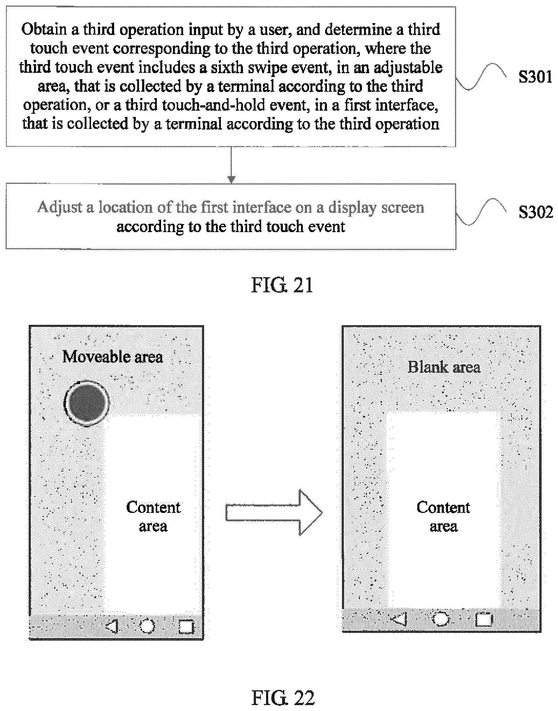

FIG. 21 is a schematic flowchart of Embodiment 3 of a method for processing a user interface of a terminal according to the present invention. This embodiment relates to a specific execution process in which the terminal adjusts a location of a first interface on a display after presenting the first interface. It should be noted that, this embodiment may be combined with the foregoing Embodiment 2, that is, location adjustment may be performed after the terminal adjusts a size of the first interface. In this embodiment, an example in which the terminal adjusts the location of the first interface on the display after presenting the first interface is used for description, that is, after the step S102, the method further includes the following steps.

S301: Obtain a third operation input by the user, and determine a third touch event corresponding to the third operation, where the third touch event includes a sixth swipe event, in the adjustable area, that is collected by the terminal according to the third operation, or a third touch-and-hold event, in the first interface, that is collected by the terminal according to the third operation.

Specifically, for a manner in which the terminal obtains the third operation input by the user, refer to a specific process in which the terminal obtains the first operation input by the user in the step S101, and for a process in which the terminal determines the third touch event according to the third operation, refer to a process in which the terminal determines the first touch event according to the first operation in the step S101. Details are not repeatedly described in this embodiment of the present invention.

When the third operation is a swipe operation performed by the user in the adjustable area of the terminal, the third touch event determined by the terminal is the sixth swipe event. In the sixth swipe event, the terminal actually determines specific parameters in the sixth swipe event, and the parameters include a swipe speed corresponding to the third operation in the adjustable area, a swipe starting point corresponding to the third operation in the adjustable area, and a swipe direction corresponding to the third operation in the adjustable area.

When the third operation is a touch-and-hold operation performed by the user in the first interface, the third touch event determined by the terminal is the third touch-and-hold event. In the third touch-and-hold event, the terminal actually determines a specific parameter in the third touch-and-hold event, and the parameter includes contact duration corresponding to the third operation in the first interface.

S302: Adjust the location of the first interface on the display according to the third touch event.

Specifically, the terminal may adjust the location of the first interface on the display according to the third touch event in the following two possible implementation manners.

In a first possible implementation manner, when the third touch event is the sixth swipe event, the terminal adjusts the location of the first interface on the display according to the swipe starting point corresponding to the third operation in the adjustable area and the swipe direction corresponding to the third operation in the adjustable area, and controls, according to the swipe speed corresponding to the third operation in the adjustable area, a speed of adjusting the location of the first interface.

Specifically, after the terminal presents the first interface, the terminal receives the third operation input by the user, and the third operation is the swipe operation performed by the user in the adjustable area of the terminal, so that the terminal determines the sixth swipe event according to the swipe operation. It should be noted that, similar to the fifth swipe event, the sixth swipe event may also include multiple independent events, and details are not repeatedly described herein. In addition, the swipe operation performed by the user in the adjustable area of the terminal may be performed by the user based on an intersection of a horizontal boundary line and a vertical boundary line of the first interface (that is, the swipe starting point corresponding to the third operation in the adjustable area). The swipe starting point may be generally a point at an upper left corner of the first interface. In addition, for a manner in which the terminal determines the swipe speed corresponding to the third operation in the adjustable area, refer to description in the foregoing embodiment, and details are not repeatedly described herein.

Afterwards, the terminal adjusts the location of the first interface on the display according to the swipe direction and the swipe starting point that are corresponding to the third operation in the adjustable area, and controls, according to the swipe speed corresponding to the third operation in the adjustable area, the speed of adjusting the location of the first interface. For example, as shown in FIG. 22, if the swipe direction corresponding to the third operation in the adjustable area is swiping left from the point at the upper left corner, the first interface moves leftwards.

In a second possible implementation manner: when the third touch event is the third touch-and-hold event, the terminal presents a second adjustable button in the first interface after the contact duration corresponding to the third operation in the first interface meets third preset duration. The second adjustable button is configured to provide, for the user, an interface to adjust the location of the first interface on the display.

Specifically, after the terminal presents the first interface, the terminal receives the third operation input by the user, and the third operation is the touch-and-hold operation performed by the user in the first interface, so that the terminal determines the third touch-and-hold event according to the touch-and-hold operation. It should be noted that the terminal may determine the contact duration of the third operation in the first interface according to coordinates of a DOWN event involved in the touch-and-hold operation and voltage duration or current duration of a touchscreen at the coordinate location.

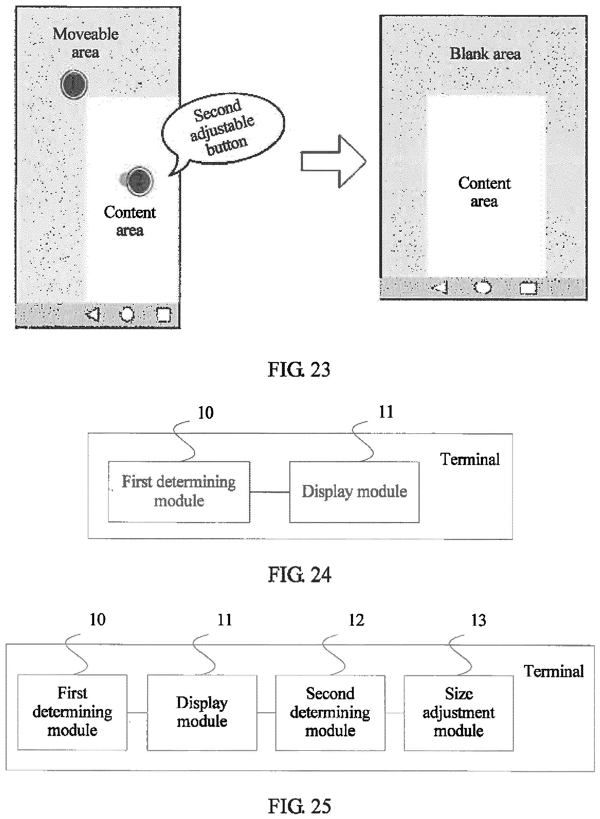

Afterwards, the terminal presents the second adjustable button in the first interface after determining that the contact duration corresponding to the third operation in the first interface meets the third preset duration. The second adjustable button is configured to provide, for the user, the interface to adjust the location of the first interface on the display. The user adjusts the location of the first interface on the display according to the second adjustable button. For example, optionally, when the terminal is a mobile phone, if the third operation is touching and holding the first interface by the user, the second adjustable button presented by the terminal may be shown in FIG 23, and the user may press the second adjustable button to adjust the location of the first interface on the display.

It should be noted that, when adjusting the location of the first interface on the display, the terminal needs to determine coordinates of the location of the first interface on the display after presenting the first interface. When the user inputs the third operation, a process in which the terminal determines the third touch event according to the third operation is actually also a process of calculating coordinates of a location of the moved first interface caused by the third operation of the user. Therefore, the terminal converts the third operation into coordinates of a new location of the first interface, so as to change the location of the first interface. For example, if original (left, top) coordinates of an upper left corner of the first interface are (left1, top1), and the terminal determines, according to the third operation of the user, that new coordinates of the upper left corner of the first interface are (left2, top2), the terminal may control a new presentation location of the first interface on the display according to (left2, top2).

In addition, when the user operates interface elements of the first interface in the first interface, event coordinates transmitted from a drive layer (an underlying layer) to an application layer (an upper layer) of a terminal system are still based on an original interface (that is, a large-screen interface). To ensure that an event corresponding to an operation performed by the user in the first interface can receive a correct response, the terminal needs to perform coordinate mapping for the event reported by the system. First, the terminal determines, according to coordinates of the event corresponding to the operation performed by the user in the first interface and a coordinate range corresponding to the first interface, whether the current operation performed by the user is in the first interface (mapping is not performed for an event outside of the first interface). Second, if the event corresponding to the current operation performed by the user is an event in the first interface, the terminal first records coordinates (X, Y) of the original event reported by the underlying layer of the terminal. The coordinates are actually coordinates of an actual location that are based on an original interface; then the terminal performs vector addition calculation on the coordinates (X, Y) and coordinates (left, top) in the first interface, to map the coordinates (X, Y) to coordinates (X1, Y1) that are based on the first interface. Finally, according to a horizontal scale and a vertical scale of the first interface, the coordinates (X1, Y1) that are based on the first interface is proportionally scaled up to coordinates (X2, Y2) that are based on the original large-screen interface, and the coordinates (X2, Y2) are finally sent to a corresponding processing module for processing. For example, after the terminal generates the first interface, the user taps an interface element, of the first interface, that is located at the center of the first interface. The tap operation is coordinates (X, Y) of a lower-left location of an original interface, but is coordinates (X1, Y1) of a center location of the first interface. Therefore, the underlying layer of the terminal reports the coordinates (X, Y) of the lower-left location to the upper layer, and the terminal obtains the location (X1, Y1) of the tap operation for the first interface according to coordinate mapping. Because the tap operation is performed at the center location for the first interface, a response should be an element of the first interface at a center location of the original interface. Therefore, the coordinates (X1, Y1) need to be mapped to coordinates (X2, Y2) of the center location of the original interface, so that the application layer of the terminal correctly responds to the tap operation.

According to the method for processing a user interface of a terminal provided in this embodiment of the present invention, a terminal may obtain a first touch event according to different first operations input by a user, and generate, according to the first touch event, a first interface that can be operated by the user with one hand. After presenting the first interface to the user, the terminal may further obtain a third touch event by using different third operations input by the user, and adjust a location of the first interface on a display according to the third touch event. That is, according to the method provided in this embodiment, the terminal may be triggered, by using different first operations, to generate the first interface, and may further adjust the location of the first interface on the display by using different third operations. Therefore, a manner of triggering the terminal to present a one-handed operation interface and a manner of adjusting the one-handed operation interface are diversified, more possibilities are brought to user experience, and intelligence of human-machine interaction is improved.

An embodiment of the present invention provides a user interface of a terminal. The terminal includes a physical button, a display, a memory, multiple application programs, and one or more processors that are configured to execute one or more programs stored in the memory, where the display includes a touch-sensitive surface and a display. The user interface includes a second interface for displaying interface elements of the second interface, and a first interface for displaying elements of the first interface and for a user to operate with one hand, where the first interface is a scaled-down second interface, content of the elements of the first interface is the same as content of the interface elements of the second interface, and sizes of the interface elements of the first interface is sizes of the elements of the scaled-down second interface; where
the second interface for displaying the interface elements of the second interface includes:
displaying the second interface on the display, where the second interface includes the interface elements of the second interface and a navigation area of the touch-sensitive surface;
after a first operation is detected in the navigation area of the touch-sensitive surface or on the physical button, and a first touch event corresponding to the first operation is determined, responding to the first touch event, where the first touch event includes at least one of: a first swipe event, in the navigation area of the terminal, that is collected by the terminal according to the first operation; a second swipe event, on the physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
displaying the first interface on the display, where the first interface includes the interface elements of the first interface and a scaled-down navigation area.

Specifically, before the user inputs the first operation, the terminal displays the second interface on the display, and the second interface may include the interface elements of the second interface and the navigation area of the touch-sensitive surface. For a specific explanation of the navigation area, refer to the foregoing method embodiment. When the user inputs the first operation, the terminal may perceive, by using some sensors or sensing components or corresponding sensing programs, whether the user inputs the first operation in the navigation area of the touch-sensitive surface or on the physical button. If the terminal detects the first operation, the terminal responds to the first operation, that is, the terminal determines the first touch event according to the first operation, and displays the first interface on the display according to the first touch event. The first interface may include the interface elements of the first interface and the scaled-down navigation area. Optionally, the terminal may make the first interface float above a surface of the second interface. For the first touch event and a specific process in which the terminal displays the first interface according to the first touch event, refer to the foregoing method embodiment, and details are not repeatedly described herein.

According to the user interface of a terminal provided in this embodiment of the present invention, a terminal may obtain a first touch event according to different first operations input by a user, and display a first interface according to the first touch event. That is, according to the user interface provided in this embodiment, the user may trigger, by using different first operations, the terminal to generate the first interface. Therefore, a manner of triggering the terminal to present a one-handed operation interface is diversified, more possibilities are brought to user experience, and intelligence of human-machine interaction is improved.

Another embodiment of the present invention provides a user interface of a terminal. The terminal includes a physical button, a display, a memory, multiple application programs, and one or more processors that are configured to execute one or more programs stored in the memory. The display includes a touch-sensitive surface and a display. The user interface includes a second interface for displaying interface elements of the second interface, and a first interface for displaying interface elements of the first interface and for a user to operate with one hand. Content of the interface elements of the first interface is the same as that of some interface elements of the interface elements of the second interface, and sizes of the interface elements of the first interface are the same as sizes of the some interface elements; where the second interface for displaying the interface elements of the second interface includes:
displaying the second interface on the display, where the second interface includes the interface elements of the second interface and a navigation area of the touch-sensitive surface;
after a first operation is detected in the navigation area of the touch-sensitive surface or on the physical button, and a first touch event corresponding to the first operation is determined, responding to the first touch event, where the first touch event includes at least one of: a first swipe event, in the navigation area of the terminal, that is collected by the terminal according to the first operation; a second swipe event, on the physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
displaying the first interface on the display, where the first interface includes the interface elements of the first interface and a scaled-down navigation area.

Specifically, before the user inputs the first operation, the terminal displays the second interface on the display, and the second interface may include the interface elements of the second interface and the navigation area of the touch-sensitive surface. For a specific explanation of the navigation area, refer to the foregoing method embodiment. When the user inputs the first operation, the terminal may perceive, by using some sensors or sensing components or corresponding sensing programs, whether the user inputs the first operation in the navigation area of the touch-sensitive surface or on the physical button. If the terminal detects the first operation, the terminal responds to the first operation, that is, the terminal determines the first touch event according to the first operation, and displays the first interface on the display according to the first touch event. The first interface may include the interface elements of the first interface and the scaled-down navigation area. Optionally, the terminal may make the first interface float above a surface of the second interface. For the first touch event and a specific process in which the terminal displays the first interface according to the first touch event, refer to the foregoing method embodiment, and details are not repeatedly described herein.

According to the user interface of a terminal provided in this embodiment of the present invention, a terminal may obtain a first touch event according to different first operations input by a user, and display a first interface according to the first touch event. That is, according to the user interface provided in this embodiment, the user may trigger, by using different first operations, the terminal to generate the first interface. Therefore, a manner of triggering the terminal to present a one-handed operation interface is diversified, more possibilities are brought to user experience, and intelligence of human-machine interaction is improved.

Persons of ordinary skill in the art may understand that all or some of the steps of the method embodiments may be implemented by a program instructing related hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

FIG. 24 is a schematic structural diagram of Embodiment 1 of a terminal according to an embodiment of the present invention. As shown in FIG. 24, the terminal may include a first determining module 10 and a display module 11.

The first determining module 10 is configured to obtain a first operation input by a user, and determine a first touch event corresponding to the first operation, where the first touch event includes at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation.

The display module 11 is configured to present, in a preset area of a display of the terminal according to the first touch event, a first interface for the user to operate with one hand, where content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

The terminal provided in this embodiment of the present invention can execute the foregoing method embodiments, and implementation principles and technical effects of the terminal are similar. Details are not repeatedly described herein.

Further, the first swipe event includes a swipe track corresponding to the first operation in the navigation area, a swipe speed corresponding to the first operation in the navigation area, and a swipe direction corresponding to the first operation in the navigation area.

The second swipe event includes a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation.

The double-tap event includes a type of the virtual button touched in the first operation, and a quantity of taps of the first operation on the virtual button touched in the first operation. The type of the virtual button includes a virtual home button, a virtual back button, and a virtual multitasking button.

The first touch-and-hold event includes the type of the virtual button touched in the first operation, and contact duration of the first operation on the virtual button touched in the first operation.

Optionally, the display module 11 is specifically configured to: when the first touch event is the first swipe event, after the first determining module 10 determines that the swipe track corresponding to the first operation in the navigation area and the swipe speed corresponding to the first operation in the navigation area meet a first preset condition, present the first interface on the display according to the swipe direction corresponding to the first operation in the navigation area.

Optionally, the display module 11 is specifically configured to: when the first touch event is the second swipe event, after the first determining module 10 determines that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, present the first interface on the display according to the swipe direction of the first operation on the physical button touched in the first operation.

Optionally, the display module 11 is specifically configured to: when the first touch event is the double-tap event, present the first interface on the display when the first determining module 10 determines that the type of the virtual button touched in the first operation matches a first preset type, and that the virtual button touched in the first operation is tapped twice in the first operation.

Optionally, the display module 11 is specifically configured to: when the first touch event is the first touch-and-hold event, present the first interface on the display when the first determining module 10 determines that the type of the virtual button touched in the first operation matches a second preset type, and that the contact duration of the first operation on the virtual button touched in the first operation meets first preset duration.

The terminal provided in this embodiment of the present invention can execute the foregoing method embodiments, and implementation principles and technical effects of the terminal are similar. Details are not repeatedly described herein.

FIG. 25 is a schematic structural diagram of Embodiment 2 of a terminal according to an embodiment of the present invention. Based on the embodiment shown in FIG. 24, further, as shown in FIG. 25, the terminal may further include a second determining module 12 and a size adjustment module 13.

The second determining module 12 is configured to: after the display module 11 presents, in the preset area of the display of the terminal according to the first touch event, the first interface for the user to operate with one hand, obtain a second operation input by the user, and determine a second touch event corresponding to the second operation, where the second touch event includes at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, where the adjustable area is an area on the display other than the first interface.

The size adjustment module 13 is configured to adjust a size of the first interface according to the second touch event.

Further, the third swipe event includes a swipe track corresponding to the second operation in the navigation area, a swipe speed corresponding to the second operation in the navigation area, and a swipe direction corresponding to the second operation in the navigation area.

The fourth swipe event includes a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation.

The second touch-and-hold event includes a type of the virtual button touched in the second operation, and contact duration of the second operation on the virtual button touched in the second operation.

The fifth swipe event includes a swipe direction corresponding to the second operation in the adjustable area, and a swipe speed corresponding to the second operation in the adjustable area.

Optionally, the size adjustment module 13 is specifically configured to: when the second touch event is the third swipe event, adjust the size of the first interface according to the swipe track corresponding to the second operation in the navigation area and the swipe direction corresponding to the second operation in the navigation area that are determined by the second determining module 12, and control, according to the swipe speed that is corresponding to the second operation in the navigation area and is determined by the second determining module 12, a speed of adjusting the size of the first interface.

Optionally, the size adjustment module 13 is specifically configured to: when the second touch event is the fourth swipe event, adjust the size of the first interface according to the type of the physical button touched in the second operation, the quantity of physical buttons touched in the second operation, the swipe track of the second operation on the physical button touched in the second operation, and the swipe direction of the second operation on the physical button touched in the second operation that are determined by the second determining module 12, and control, according to the swipe speed that is of the second operation on the physical button touched in the second operation and is determined by the second determining module 12, a speed of adjusting the size of the first interface.

Optionally, the size adjustment module 13 is specifically configured to: when the second touch event is the second touch-and-hold event, after it is determined that the type that is of the virtual button touched in the second operation and is determined by the second determining module 12 matches a third preset type, and the contact duration that is of the second operation on the virtual button touched in the second operation and is determined by the second determining module 12 meets second preset duration, instruct the display module 11 to present a first adjustable button in the first interface, where the first adjustable button is configured to provide, for the user, an interface to adjust the size of the first interface.

Optionally, the size adjustment module 13 is specifically configured to: when the second touch event is the fifth swipe event, adjust the size of the first interface according to the swipe direction that is corresponding to the second operation in the adjustable area and is determined by the second determining module 12, and control, according to the swipe speed that is corresponding to the second operation in the adjustable area and is determined by the second determining module 12, a speed of adjusting the size of the first interface.

The terminal provided in this embodiment of the present invention can execute the foregoing method embodiments, and implementation principles and technical effects of the terminal are similar. Details are not repeatedly described herein.

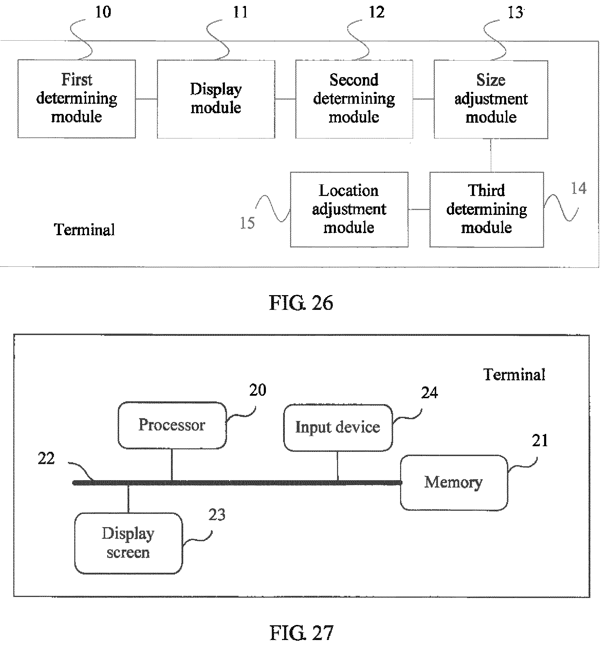

FIG. 26 is a schematic structural diagram of Embodiment 3 of a terminal according to an embodiment of the present invention. Based on the foregoing embodiment shown in FIG. 24 or FIG. 25, as shown in FIG. 26, the terminal may further include a third determining module 14 and a location adjustment module 15.

The third determining module 14 is configured to obtain a third operation input by the user, and determine a third touch event corresponding to the third operation, where the third touch event includes a sixth swipe event, in the adjustable area, that is collected by the terminal according to the third operation, or a third touch-and-hold event, in the first interface, that is collected by the terminal according to the third operation.

The location adjustment module 15 is configured to adjust a location of the first interface on the display according to the third touch event.

It should be noted that the terminal shown in FIG. 26 is based on the terminal shown in FIG. 25, and certainly, the terminal in this embodiment of the present invention may also be based on the terminal shown in FIG. 24.

Further, the sixth swipe event includes a swipe speed corresponding to the third operation in the adjustable area, a swipe starting point corresponding to the third operation in the adjustable area, and a swipe direction corresponding to the third operation in the adjustable area.

The third touch-and-hold event includes contact duration corresponding to the third operation in the first interface.

Optionally, the location adjustment module 15 is specifically configured to: when the third touch event is the sixth swipe event, adjust the location of the first interface on the display according to the swipe starting point corresponding to the third operation in the adjustable area and the swipe direction corresponding to the third operation in the adjustable area that are determined by the third determining module 14, and control, according to the swipe speed that is corresponding to the third operation in the adjustable area and is determined by the third determining module 14, a speed of adjusting the location of the first interface.

Optionally, the location adjustment module 15 is specifically configured to: when the third touch event is the third touch-and-hold event, after it is determined that the contact duration that is corresponding to the third operation in the first interface and is determined by the third determining module 14 meets third preset duration, instruct the display module 11 to present a second adjustable button in the first interface, where the second adjustable button is configured to provide, for the user, an interface to adjust the location of the first interface on the display.

The terminal provided in this embodiment of the present invention can execute the foregoing method embodiments, and implementation principles and technical effects of the terminal are similar. Details are not repeatedly described herein.

FIG. 27 is a schematic structural diagram of Embodiment 4 of a terminal according to the present invention. As shown in FIG. 27, the terminal may include a processor 20 such as a CPU, a memory 21, at least one communications bus 22, a display 23, and an input device 24. The communications bus 22 is configured to implement connection and communication between components. The memory 21 may include a high-speed RAM memory, or may include a nonvolatile memory NVM, for example, at least one magnetic disk memory. The memory 21 may store various programs to implement various processing functions and method steps in this embodiment. The input device 24 is configured to provide an input interface for a user, to receive an operation or instruction input by the user.

The input device 24 is configured to obtain a first operation input by a user.

The processor 20 is configured to determine a first touch event corresponding to the first operation obtained by the input device, where the first touch event includes at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation.

The display 23 is configured to present, in a preset area of the display 23 of the terminal according to the first touch event determined by the processor 20, a first interface for the user to operate with one hand, where content of interface elements of the first interface is the same as content of interface elements of a second interface displayed on the display 23 of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

The terminal provided in this embodiment of the present invention can execute the foregoing method embodiments, and implementation principles and technical effects of the terminal are similar. Details are not repeatedly described herein.

Further, the first swipe event includes a swipe track corresponding to the first operation in the navigation area, a swipe speed corresponding to the first operation in the navigation area, and a swipe direction corresponding to the first operation in the navigation area.

The second swipe event includes a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation.

The double-tap event includes a type of the virtual button touched in the first operation, and a quantity of taps of the first operation on the virtual button touched in the first operation. The type of the virtual button includes a virtual home button, a virtual back button, and a virtual multitasking button.

The first touch-and-hold event includes the type of the virtual button touched in the first operation, and contact duration of the first operation on the virtual button touched in the first operation.

Optionally, the display 23 is specifically configured to: when the first touch event is the first swipe event, after the processor 20 determines that the swipe track corresponding to the first operation in the navigation area and the swipe speed corresponding to the first operation in the navigation area meet a first preset condition, present the first interface on the display 23 according to an indication that is performed by the processor 20 based on the swipe direction corresponding to the first operation in the navigation area.

Optionally, the display 23 is specifically configured to: when the first touch event is the second swipe event, after the processor 20 determines that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, present the first interface on the display 23 according to an indication that is performed by the processor 20 based on the swipe direction of the first operation on the physical button touched in the first operation.

Optionally, the display 23 is specifically configured to: when the first touch event is the double-tap event, present the first interface on the display 23 when the processor 20 determines that the type of the virtual button touched in the first operation matches a first preset type, and that the virtual button touched in the first operation is tapped twice in the first operation.

Optionally, the display 23 is specifically configured to: when the first touch event is the first touch-and-hold event, present the first interface on the display 23 when the processor 20 determines that the type of the virtual button touched in the first operation matches a second preset type, and that the contact duration of the first operation on the virtual button touched in the first operation meets first preset duration.

In an optional implementation manner of this embodiment of the present invention, the processor 20 is further configured to: after the display 23 presents the first interface for the user to operate with one hand, obtain a second operation input by the user, and determine a second touch event corresponding to the second operation; and adjust a size of the first interface according to the second touch event, where the second touch event includes at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, where the adjustable area is an area on the display 23 other than the first interface.

Further, the third swipe event includes a swipe track corresponding to the second operation in the navigation area, a swipe speed corresponding to the second operation in the navigation area, and a swipe direction corresponding to the second operation in the navigation area.

The fourth swipe event includes a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation.

The second touch-and-hold event includes a type of the virtual button touched in the second operation, and contact duration of the second operation on the virtual button touched in the second operation.

The fifth swipe event includes a swipe direction corresponding to the second operation in the adjustable area, and a swipe speed corresponding to the second operation in the adjustable area.

Optionally, the processor 20 is specifically configured to: when the second touch event is the third swipe event, adjust the size of the first interface according to the swipe track corresponding to the second operation in the navigation area and the swipe direction corresponding to the second operation in the navigation area, and control, according to the swipe speed corresponding to the second operation in the navigation area, a speed of adjusting the size of the first interface.

Optionally, the processor 20 is specifically configured to: when the second touch event is the fourth swipe event, adjust the size of the first interface according to the type of the physical button touched in the second operation, the quantity of physical buttons touched in the second operation, the swipe track of the second operation on the physical button touched in the second operation, and the swipe direction of the second operation on the physical button touched in the second operation, and control, according to the swipe speed of the second operation on the physical button touched in the second operation, a speed of adjusting the size of the first interface.

Optionally, the processor 20 is specifically configured to: when the second touch event is the second touch-and-hold event, after determining that the type of the virtual button touched in the second operation matches a third preset type, and that the contact duration of the second operation on the virtual button touched in the second operation meets second preset duration, instruct the display 23 to present a first adjustable button in the first interface, where the first adjustable button is configured to provide, for the user, an interface to adjust the size of the first interface.

Optionally, the processor 20 is specifically configured to: when the second touch event is the fifth swipe event, adjust the size of the first interface according to the swipe direction corresponding to the second operation in the adjustable area, and control, according to the swipe speed corresponding to the second operation in the adjustable area, a speed of adjusting the size of the first interface.

The terminal provided in this embodiment of the present invention can execute the foregoing method embodiments, and implementation principles and technical effects of the terminal are similar. Details are not repeatedly described herein.

In another possible implementation manner of this embodiment of the present invention, the processor 20 is further configured to: obtain a third operation input by the user, and determine a third touch event corresponding to the third operation; and adjust a location of the first interface on the display 23 according to the third touch event, where the third touch event includes a sixth swipe event, in the adjustable area, that is collected by the terminal according to the third operation, or a third touch-and-hold event, in the first interface, that is collected by the terminal according to the third operation.

Further, the sixth swipe event includes a swipe speed corresponding to the third operation in the adjustable area, a swipe starting point corresponding to the third operation in the adjustable area, and a swipe direction corresponding to the third operation in the adjustable area.

The third touch-and-hold event includes contact duration corresponding to the third operation in the first interface.

Optionally, the processor 20 is specifically configured to: when the third touch event is the sixth swipe event, adjust the location of the first interface on the display 23 according to the swipe starting point corresponding to the third operation in the adjustable area and the swipe direction corresponding to the third operation in the adjustable area, and control, according to the swipe speed corresponding to the third operation in the adjustable area, a speed of adjusting the location of the first interface.

Optionally, the processor 20 is specifically configured to: when the third touch event is the third touch-and-hold event, after determining that the contact duration corresponding to the third operation in the first interface meets third preset duration, instruct the display 23 to present a second adjustable button in the first interface, where the second adjustable button is configured to provide, for the user, an interface to adjust the location of the first interface on the display 23.

The terminal provided in this embodiment of the present invention can execute the foregoing method embodiments, and implementation principles and technical effects of the terminal are similar. Details are not repeatedly described herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for processing a user interface of a terminal, comprising:
obtaining a first operation input by a user, and determining a first touch event corresponding to the first operation, wherein the first touch event comprises at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
presenting, in a preset area of a display of the terminal according to the first touch event, a first interface for the user to operate with one hand, wherein content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

2. The method according to claim 1, wherein the first swipe event comprises a swipe track corresponding to the first operation in the navigation area, a swipe speed corresponding to the first operation in the navigation area, and a swipe direction corresponding to the first operation in the navigation area;
the second swipe event comprises a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation;
the double-tap event comprises a type of the virtual button touched in the first operation, and a quantity of taps of the first operation on the virtual button touched in the first operation, wherein the type of the virtual button comprises a virtual home button, a virtual back button, and a virtual multitasking button; and
the first touch-and-hold event comprises the type of the virtual button touched in the first operation, and contact duration of the first operation on the virtual button touched in the first operation.

3. The method according to claim 2, wherein the presenting, in a preset area of a display of the terminal according to the first touch event, a first interface for the user to operate with one hand specifically comprises:
when the first touch event is the first swipe event, after determining that the swipe track corresponding to the first operation in the navigation area and the swipe speed corresponding to the first operation in the navigation area meet a first preset condition, presenting, by the terminal, the first interface on the display according to the swipe direction corresponding to the first operation in the navigation area; or
when the first touch event is the second swipe event, after determining that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, presenting, by the terminal, the first interface on the display according to the swipe direction of the first operation on the physical button touched in the first operation; or
when the first touch event is the double-tap event, presenting, by the terminal, the first interface on the display when determining that the type of the virtual button touched in the first operation matches a first preset type, and that the virtual button touched in the first operation is tapped twice in the first operation; or
when the first touch event is the first touch-and-hold event, presenting, by the terminal, the first interface on the display when determining that the type of the virtual button touched in the first operation matches a second preset type, and that the contact duration of the first operation on the virtual button touched in the first operation meets first preset duration.

4. The method according to any one of claims 1 to 3, wherein after the presenting, in a preset area of a display of the terminal according to the first touch event, a first interface for the user to operate with one hand, the method further comprises:
obtaining a second operation input by the user, and determining a second touch event corresponding to the second operation, wherein the second touch event comprises at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, wherein the adjustable area is an area on the display other than the first interface; and
adjusting a size of the first interface according to the second touch event.

5. The method according to claim 4, wherein the third swipe event comprises a swipe track corresponding to the second operation in the navigation area, a swipe speed corresponding to the second operation in the navigation area, and a swipe direction corresponding to the second operation in the navigation area;
the fourth swipe event comprises a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation;
the second touch-and-hold event comprises a type of the virtual button touched in the second operation, and contact duration of the second operation on the virtual button touched in the second operation; and
the fifth swipe event comprises a swipe direction corresponding to the second operation in the adjustable area, and a swipe speed corresponding to the second operation in the adjustable area.

6. The method according to claim 5, wherein the adjusting a size of the first interface according to the second touch event specifically comprises:
when the second touch event is the third swipe event, adjusting, by the terminal, the size of the first interface according to the swipe track corresponding to the second operation in the navigation area and the swipe direction corresponding to the second operation in the navigation area, and controlling, according to the swipe speed corresponding to the second operation in the navigation area, a speed of adjusting the size of the first interface; or
when the second touch event is the fourth swipe event, adjusting, by the terminal, the size of the first interface according to the type of the physical button touched in the second operation, the quantity of physical buttons touched in the second operation, the swipe track of the second operation on the physical button touched in the second operation, and the swipe direction of the second operation on the physical button touched in the second operation, and controlling, according to the swipe speed of the second operation on the physical button touched in the second operation, a speed of adjusting the size of the first interface; or
when the second touch event is the second touch-and-hold event, presenting, by the terminal, a first adjustable button in the first interface after determining that the type of the virtual button touched in the second operation matches a third preset type, and that the contact duration of the second operation on the virtual button touched in the second operation meets second preset duration, wherein the first adjustable button is configured to provide, for the user, an interface to adjust the size of the first interface; or
when the second touch event is the fifth swipe event, adjusting, by the terminal, the size of the first interface according to the swipe direction corresponding to the second operation in the adjustable area, and controlling, according to the swipe speed corresponding to the second operation in the adjustable area, a speed of adjusting the size of the first interface.

7. The method according to any one of claims 4 to 6, wherein the method further comprises:
obtaining a third operation input by the user, and determining a third touch event corresponding to the third operation, wherein the third touch event comprises a sixth swipe event, in the adjustable area, that is collected by the terminal according to the third operation, or a third touch-and-hold event, in the first interface, that is collected by the terminal according to the third operation; and
adjusting a location of the first interface on the display according to the third touch event.

8. The method according to claim 7, wherein the sixth swipe event comprises a swipe speed corresponding to the third operation in the adjustable area, a swipe starting point corresponding to the third operation in the adjustable area, and a swipe direction corresponding to the third operation in the adjustable area; and
the third touch-and-hold event comprises contact duration corresponding to the third operation in the first interface.

9. The method according to claim 8, wherein the adjusting a location of the first interface on the display according to the third touch event specifically comprises:
when the third touch event is the sixth swipe event, adjusting, by the terminal, the location of the first interface on the display according to the swipe starting point corresponding to the third operation in the adjustable area and the swipe direction corresponding to the third operation in the adjustable area, and controlling, according to the swipe speed corresponding to the third operation in the adjustable area, a speed of adjusting the location of the first interface; or
when the third touch event is the third touch-and-hold event, presenting, by the terminal, a second adjustable button in the first interface after determining that the contact duration corresponding to the third operation in the first interface meets third preset duration, wherein the second adjustable button is configured to provide, for the user, an interface to adjust the location of the first interface on the display.

10. A user interface of a terminal, wherein the terminal comprises: a physical button, a display, a memory, multiple application programs, and one or more processors that are configured to execute one or more programs stored in the memory, the display comprises a touch-sensitive surface and a display, and the user interface comprises a second interface for displaying interface elements of the second interface, and a first interface for displaying elements of the first interface and for a user to operate with one hand, wherein the first interface is a scaled-down second interface, content of the elements of the first interface is the same as content of the interface elements of the second interface, and sizes of the interface elements of the first interface are sizes of the elements of the scaled-down second interface; wherein
the second interface for displaying the interface elements of the second interface comprises:
displaying the second interface on the display, wherein the second interface comprises the interface elements of the second interface and a navigation area of the touch-sensitive surface;
after a first operation is detected in the navigation area of the touch-sensitive surface or on the physical button, and a first touch event corresponding to the first operation is determined, responding to the first touch event, wherein the first touch event comprises at least one of: a first swipe event, in the navigation area of the terminal, that is collected by the terminal according to the first operation; a second swipe event, on the physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
displaying the first interface on the display, wherein the first interface comprises the interface elements of the first interface and a scaled-down navigation area.

11. A user interface of a terminal, wherein the terminal comprises a physical button, a display, a memory, multiple application programs, and one or more processors that are configured to execute one or more programs stored in the memory, the display comprises a touch-sensitive surface and a display, and the user interface comprises a second interface for displaying interface elements of the second interface, and a first interface for displaying interface elements of the first interface and for a user to operate with one hand, wherein content of the interface elements of the first interface is the same as that of some interface elements of the interface elements of the second interface, and sizes of the interface elements of the first interface are the same as sizes of the some interface elements; wherein
the second interface for displaying the interface elements of the second interface comprises:
displaying the second interface on the display, wherein the second interface comprises the interface elements of the second interface and a navigation area of the touch-sensitive surface;
after a first operation is detected in the navigation area of the touch-sensitive surface or on the physical button, and a first touch event corresponding to the first operation is determined, responding to the first touch event, wherein the first touch event comprises at least one of: a first swipe event, in the navigation area of the terminal, that is collected by the terminal according to the first operation; a second swipe event, on the physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
displaying the first interface on the display, wherein the first interface comprises the interface elements of the first interface and a scaled-down navigation area.

12. A terminal, comprising:
a first determining module, configured to obtain a first operation input by a user, and determine a first touch event corresponding to the first operation, wherein the first touch event comprises at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
a display module, configured to present, in a preset area of a display of the terminal according to the first touch event, a first interface for the user to operate with one hand, wherein content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

13. The terminal according to claim 12, wherein the first swipe event comprises a swipe track corresponding to the first operation in the navigation area, a swipe speed corresponding to the first operation in the navigation area, and a swipe direction corresponding to the first operation in the navigation area;
the second swipe event comprises a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation;
the double-tap event comprises a type of the virtual button touched in the first operation, and a quantity of taps of the first operation on the virtual button touched in the first operation, wherein the type of the virtual button comprises a virtual home button, a virtual back button, and a virtual multitasking button; and
the first touch-and-hold event comprises the type of the virtual button touched in the first operation, and contact duration of the first operation on the virtual button touched in the first operation.

14. The terminal according to claim 13, wherein the display module is specifically configured to: when the first touch event is the first swipe event, after the first determining module determines that the swipe track corresponding to the first operation in the navigation area and the swipe speed corresponding to the first operation in the navigation area meet a first preset condition, present the first interface on the display according to the swipe direction corresponding to the first operation in the navigation area; or
the display module is specifically configured to: when the first touch event is the second swipe event, after the first determining module determines that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, present the first interface on the display according to the swipe direction of the first operation on the physical button touched in the first operation; or
the display module is specifically configured to: when the first touch event is the double-tap event, present the first interface on the display when the first determining module determines that the type of the virtual button touched in the first operation matches a first preset type, and that the virtual button touched in the first operation is tapped twice in the first operation; or
the display module is specifically configured to: when the first touch event is the first touch-and-hold event, present the first interface on the display when the first determining module determines that the type of the virtual button touched in the first operation matches a second preset type, and that the contact duration of the first operation on the virtual button touched in the first operation meets first preset duration.

15. The terminal according to any one of claims 12 to 14, wherein the terminal further comprises:
a second determining module, configured to: after the display module presents, in the preset area of the display of the terminal according to the first touch event, the first interface for the user to operate with one hand, obtain a second operation input by the user, and determine a second touch event corresponding to the second operation, wherein the second touch event comprises at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, wherein the adjustable area is an area on the display other than the first interface; and
a size adjustment module, configured to adjust a size of the first interface according to the second touch event.

16. The terminal according to claim 15, wherein the third swipe event comprises a swipe track corresponding to the second operation in the navigation area, a swipe speed corresponding to the second operation in the navigation area, and a swipe direction corresponding to the second operation in the navigation area;
the fourth swipe event comprises a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation;
the second touch-and-hold event comprises a type of the virtual button touched in the second operation, and contact duration of the second operation on the virtual button touched in the second operation; and
the fifth swipe event comprises a swipe direction corresponding to the second operation in the adjustable area, and a swipe speed corresponding to the second operation in the adjustable area.

17. The terminal according to claim 16, wherein the size adjustment module is specifically configured to: when the second touch event is the third swipe event, adjust the size of the first interface according to the swipe track corresponding to the second operation in the navigation area and the swipe direction corresponding to the second operation in the navigation area that are determined by the second determining module, and control, according to the swipe speed that is corresponding to the second operation in the navigation area and is determined by the second determining module, a speed of adjusting the size of the first interface; or
the size adjustment module is specifically configured to: when the second touch event is the fourth swipe event, adjust the size of the first interface according to the type of the physical button touched in the second operation, the quantity of physical buttons touched in the second operation, the swipe track of the second operation on the physical button touched in the second operation, and the swipe direction of the second operation on the physical button touched in the second operation that are determined by the second determining module, and control, according to the swipe speed that is of the second operation on the physical button touched in the second operation and is determined by the second determining module, a speed of adjusting the size of the first interface; or
the size adjustment module is specifically configured to: when the second touch event is the second touch-and-hold event, after it is determined that the type that is of the virtual button touched in the second operation and is determined by the second determining module matches a third preset type, and the contact duration that is of the second operation on the virtual button touched in the second operation and is determined by the second determining module meets second preset duration, instruct the display module to present a first adjustable button in the first interface, wherein the first adjustable button is configured to provide, for the user, an interface to adjust the size of the first interface; or
the size adjustment module is specifically configured to: when the second touch event is the fifth swipe event, adjust the size of the first interface according to the swipe direction that is corresponding to the second operation in the adjustable area and is determined by the second determining module, and control, according to the swipe speed that is corresponding to the second operation in the adjustable area and is determined by the second determining module, a speed of adjusting the size of the first interface.

18. The terminal according to any one of claims 15 to 17, wherein the terminal further comprises:
a third determining module, configured to obtain a third operation input by the user, and determine a third touch event corresponding to the third operation, wherein the third touch event comprises a sixth swipe event, in the adjustable area, that is collected by the terminal according to the third operation, or a third touch-and-hold event, in the first interface, that is collected by the terminal according to the third operation; and
a location adjustment module, configured to adjust a location of the first interface on the display according to the third touch event.

19. The terminal according to claim 18, wherein the sixth swipe event comprises a swipe speed corresponding to the third operation in the adjustable area, a swipe starting point corresponding to the third operation in the adjustable area, and a swipe direction corresponding to the third operation in the adjustable area; and
the third touch-and-hold event comprises contact duration corresponding to the third operation in the first interface.

20. The terminal according to claim 19, wherein the location adjustment module is specifically configured to: when the third touch event is the sixth swipe event, adjust the location of the first interface on the display according to the swipe starting point corresponding to the third operation in the adjustable area and the swipe direction corresponding to the third operation in the adjustable area that are determined by the third determining module, and control, according to the swipe speed that is corresponding to the third operation in the adjustable area and is determined by the third determining module, a speed of adjusting the location of the first interface; or
the location adjustment module is specifically configured to: when the third touch event is the third touch-and-hold event, after it is determined that the contact duration that is corresponding to the third operation in the first interface and is determined by the third determining module meets third preset duration, instruct the display module to present a second adjustable button in the first interface, wherein the second adjustable button is configured to provide, for the user, an interface to adjust the location of the first interface on the display.

21. A terminal, comprising:
an input device, configured to obtain a first operation input by a user;
a processor, configured to determine a first touch event corresponding to the first operation obtained by the input device, wherein the first touch event comprises at least one of: a first swipe event, in a navigation area of the terminal, that is collected by the terminal according to the first operation; a second swipe event, on a physical button of the terminal, that is collected by the terminal according to the first operation; a double-tap event, on a virtual button in the navigation area, that is collected by the terminal according to the first operation; or a first touch-and-hold event, on the virtual button in the navigation area, that is collected by the terminal according to the first operation; and
a display, configured to present, in a preset area of the display of the terminal according to the first touch event determined by the processor, a first interface for the user to operate with one hand, wherein content of interface elements of the first interface is the same as content of interface elements of a second interface displayed on the display of the terminal, and sizes of the interface elements of the first interface are sizes of the interface elements of the scaled-down second interface; or content of interface elements of the first interface is the same as content of some interface elements of interface elements of the second interface, and sizes of the interface elements of the first interface are the same as sizes of the some interface elements.

22. The terminal according to claim 21, wherein the first swipe event comprises a swipe track corresponding to the first operation in the navigation area, a swipe speed corresponding to the first operation in the navigation area, and a swipe direction corresponding to the first operation in the navigation area;
the second swipe event comprises a type of the physical button touched in the first operation, a quantity of physical buttons touched in the first operation, a swipe track of the first operation on the physical button touched in the first operation, a swipe speed of the first operation on the physical button touched in the first operation, and a swipe direction of the first operation on the physical button touched in the first operation;
the double-tap event comprises a type of the virtual button touched in the first operation, and a quantity of taps of the first operation on the virtual button touched in the first operation, wherein the type of the virtual button comprises a virtual home button, a virtual back button, and a virtual multitasking button; and
the first touch-and-hold event comprises the type of the virtual button touched in the first operation, and contact duration of the first operation on the virtual button touched in the first operation.

23. The terminal according to claim 22, wherein the display is specifically configured to: when the first touch event is the first swipe event, after the processor determines that the swipe track corresponding to the first operation in the navigation area and the swipe speed corresponding to the first operation in the navigation area meet a first preset condition, present the first interface on the display according to an indication that is performed by the processor based on the swipe direction corresponding to the first operation in the navigation area; or
the display is specifically configured to: when the first touch event is the second swipe event, after the processor determines that the type of the physical button touched in the first operation, the quantity of physical buttons touched in the first operation, the swipe track of the first operation on the physical button touched in the first operation, and the swipe speed of the first operation on the physical button touched in the first operation meet a second preset condition, present the first interface on the display according to an indication that is performed by the processor based on the swipe direction of the first operation on the physical button touched in the first operation; or
the display is specifically configured to: when the first touch event is the double-tap event, present the first interface on the display when the processor determines that the type of the virtual button touched in the first operation matches a first preset type, and that the virtual button touched in the first operation is tapped twice in the first operation; or
the display is specifically configured to: when the first touch event is the first touch-and-hold event, present the first interface on the display when the processor determines that the type of the virtual button touched in the first operation matches a second preset type, and that the contact duration of the first operation on the virtual button touched in the first operation meets first preset duration.

24. The terminal according to any one of claims 21 to 23, wherein the processor is further configured to: after the display presents the first interface for the user to operate with one hand, obtain a second operation input by the user, and determine a second touch event corresponding to the second operation; and adjust a size of the first interface according to the second touch event, wherein the second touch event comprises at least one of: a third swipe event, in the navigation area of the terminal, that is collected by the terminal according to the second operation; a fourth swipe event, on the physical button of the terminal, that is collected by the terminal according to the second operation; a second touch-and-hold event, on the virtual button in the navigation area, that is collected by the terminal according to the second operation; or a fifth swipe event, in an adjustable area, that is collected by the terminal according to the second operation, wherein the adjustable area is an area on the display other than the first interface.

25. The terminal according to claim 24, wherein the third swipe event comprises a swipe track corresponding to the second operation in the navigation area, a swipe speed corresponding to the second operation in the navigation area, and a swipe direction corresponding to the second operation in the navigation area;
the fourth swipe event comprises a type of the physical button touched in the second operation, a quantity of physical buttons touched in the second operation, a swipe track of the second operation on the physical button touched in the second operation, a swipe speed of the second operation on the physical button touched in the second operation, and a swipe direction of the second operation on the physical button touched in the second operation;
the second touch-and-hold event comprises a type of the virtual button touched in the second operation, and contact duration of the second operation on the virtual button touched in the second operation; and
the fifth swipe event comprises a swipe direction corresponding to the second operation in the adjustable area, and a swipe speed corresponding to the second operation in the adjustable area.

26. The terminal according to claim 25, wherein the processor is specifically configured to: when the second touch event is the third swipe event, adjust the size of the first interface according to the swipe track corresponding to the second operation in the navigation area and the swipe direction corresponding to the second operation in the navigation area, and control, according to the swipe speed corresponding to the second operation in the navigation area, a speed of adjusting the size of the first interface; or
the processor is specifically configured to: when the second touch event is the fourth swipe event, adjust the size of the first interface according to the type of the physical button touched in the second operation, the quantity of physical buttons touched in the second operation, the swipe track of the second operation on the physical button touched in the second operation, and the swipe direction of the second operation on the physical button touched in the second operation, and control, according to the swipe speed of the second operation on the physical button touched in the second operation, a speed of adjusting the size of the first interface; or
the processor is specifically configured to: when the second touch event is the second touch-and-hold event, after determining that the type of the virtual button touched in the second operation matches a third preset type, and that the contact duration of the second operation on the virtual button touched in the second operation meets second preset duration, instruct the display to present a first adjustable button in the first interface, wherein the first adjustable button is configured to provide, for the user, an interface to adjust the size of the first interface; or
the processor is specifically configured to: when the second touch event is the fifth swipe event, adjust the size of the first interface according to the swipe direction corresponding to the second operation in the adjustable area, and control, according to the swipe speed corresponding to the second operation in the adjustable area, a speed of adjusting the size of the first interface.

27. The terminal according to any one of claims 24 to 26, wherein the processor is further configured to: obtain a third operation input by the user, and determine a third touch event corresponding to the third operation; and adjust a location of the first interface on the display according to the third touch event, wherein the third touch event comprises a sixth swipe event, in the adjustable area, that is collected by the terminal according to the third operation, or a third touch-and-hold event, in the first interface, that is collected by the terminal according to the third operation.

28. The terminal according to claim 27, wherein the sixth swipe event comprises a swipe speed corresponding to the third operation in the adjustable area, a swipe starting point corresponding to the third operation in the adjustable area, and a swipe direction corresponding to the third operation in the adjustable area; and
the third touch-and-hold event comprises contact duration corresponding to the third operation in the first interface.

29. The terminal according to claim 28, wherein the processor is specifically configured to: when the third touch event is the sixth swipe event, adjust the location of the first interface on the display according to the swipe starting point corresponding to the third operation in the adjustable area and the swipe direction corresponding to the third operation in the adjustable area, and control, according to the swipe speed corresponding to the third operation in the adjustable area, a speed of adjusting the location of the first interface; or
the processor is specifically configured to: when the third touch event is the third touch-and-hold event, after determining that the contact duration corresponding to the third operation in the first interface meets third preset duration, instruct the display to present a second adjustable button in the first interface, wherein the second adjustable button is configured to provide, for the user, an interface to adjust the location of the first interface on the display.
